# EUROPÄISCHE PATENTANMELDUNG

(11) **EP 4 835 868 A1**
(43) Veröffentlichungstag der Anmeldung: **04.11.2026**
(21) Anmeldenummer: 26175354.5
(22) Anmeldetag: 29.04.2026
(51) Int. Cl.: G09F 15/00, A47G 1/00, F16B 19/02, F16B 21/07

(54) **RAHMEN, INSBESONDERE LED-LEUCHTBOX- RAHMEN**

(30) Priorität: 29.04.2025 AT 5003825 U
(71) Anmelder: Best Systems GmbH, 1230 Wien (AT)
(72) Erfinder: SALIHBASIC, Asmir, 1190 Wien (AT); SZLEZAK, Patrick, 1140 Wien (AT); WEISSGRAM, Franz, 3662 Münichreith am Ostrong (AT)
(74) Vertreter: SONN Patentanwälte GmbH & Co KG

(57) **Zusammenfassung**

Rahmen (1) aufweisend:
ein erstes Rahmenelement (2a),
ein zweites Rahmenelement (2b) und
eine Verbindungseinrichtung (6), zum lösbaren Verbinden des ersten Rahmenelements (2a) mit dem zweiten Rahmenelement (2b), wobei in einem Verbindungszustand der Verbindungseinrichtung (6) das erste Rahmenelement (2a) am zweiten Rahmenelement (2b) anliegt, wobei
die Verbindungseinrichtung (6) eine Rasteinrichtung (7) mit einem ersten Rastelement (8) am ersten Rahmenelement (2a), einem zweiten Rastelement (9) am zweiten Rahmenelement (2b) und einem Auslöseelement (10) aufweist, welches zwischen einer Ruheposition, in welcher eine Trennung des ersten Rahmenelements (2a) vom zweiten Rahmenelement (2b) blockiert ist, und einer Auslöseposition, in welcher die Trennung freigegeben ist, verstellbar ausgebildet ist, wobei im Verbindungszustand der Verbindungseinrichtung (6), mit dem Auslöseelement (10) in der Ruheposition, das erste Rastelement (8) mit dem zweiten Rastelement (9) verrastet ist und im Verbindungszustand der Verbindungseinrichtung (6), mit dem Auslöseelement (10) in der Auslöseposition, das erste Rastelement (8) vom zweiten Rastelement (9) gelöst ist.

## Beschreibung

Die Erfindung betrifft einen Rahmen, insbesondere LED-Leuchtbox-Rahmen, aufweisend:
ein erstes Rahmenelement,
ein zweites Rahmenelement und
eine Verbindungseinrichtung, welche ausgebildet ist, das erste Rahmenelement lösbar mit dem zweiten Rahmenelement zu verbinden, wobei in einem Verbindungszustand der Verbindungseinrichtung das erste Rahmenelement am zweiten Rahmenelement anliegt.

Die Erfindung betrifft zudem ein Verfahren zum lösbaren Verbinden eines ersten Rahmenelements mit einem zweiten Rahmenelement eines Rahmens, insbesondere LED-Leuchtbox-Rahmens.

Im Stand der Technik ist es bekannt, LED-Leuchtkästen für Ausstellungen und Werbezwecke einzusetzen. Bei einer bekannten Ausführung wird ein flächiger Werbeträger, beispielsweise ein bedruckter Stoff, in einem gespannten Zustand an einem Rahmen befestigt. Der Rahmen soll dabei den Werbeträger derart gespannt halten, dass keine Falten oder Wölbungen auftreten, wenn der Werbeträger, etwa im Rahmen von Ausstellungen, präsentiert wird. Bekannt ist es dabei auch, den Rahmen mit Aufnahmeschienen auszubilden, in denen die Ränder des Werbeträgers eingespannt werden. Je nach Anwendung können die LED-Leuchtkästen freistehend, als leuchtende Wandbilder oder von der Decke abgehängt angeordnet werden.

Bisher wurden die einzelnen Rahmenelemente des LED-Leuchtkastens miteinander verschraubt. Nachteilig ist dabei, dass die Zusammenstellung des Rahmens durch Verbinden der Rahmenelemente zeitaufwändig ist.

Zudem sind Verbindungselemente bekannt, welche zur Verbindung zweier Rahmenelemente in die Rahmenelemente eingesetzt werden.

Die DE 4403389 A1 betrifft eine Rahmenecke, die aus einem Eckstück mit wenigstens zwei Verbindungsschenkeln besteht, wobei jeder Verbindungsschenkel in einen Rahmenholm einschiebbar ist. Zur Sicherung dieser Steckverbindung ist eine Querverrasteinrichtung vorgesehen. Die Querverrasteinrichtung weist am Verbindungsschenkel mindestens eine einstückig angeformte, federnde Zunge mit einem davon quer zur Einsteckrichtung vorstehenden Verrastglied auf, während im Rahmenholm eine Verrastaufnahme zur Aufnahme bzw. zum Einschnappen des Verrastglieds vorgesehen ist. Für die Herstellung eines Rahmens sind daher zusätzliche Rahmenecken vorzusehen.

Die US 4,862,612 offenbart einen L-förmigen Eckverbinder mit zwei Schenkeln, die in Rahmenelemente eingeschoben und über eine Rastverbindung darin gehalten werden. Die Rastverbindung weist ein federnd am Eckverbinder angeordnetes Schnappelement auf, welches zum Einrasten in eine Ausnehmung im Rahmenteil ausgebildet ist. Zudem ist auf der dem Schnappelement gegenüberliegenden Seite des Eckverbinders ein Federelement oder ein Führungselement vorgesehen, welches das Schnappelement im Eingriff mit der Ausnehmung hält. Auch diese Rahmenkonstruktion erfordert Eckverbinder zusätzlich zu den Rahmenelementen.

Aufgabe der Erfindung ist es daher, zumindest einzelne Nachteile des Standes der Technik zu lindern bzw. zu beheben. Die Erfindung setzt sich insbesondere zum Ziel, einen Rahmen der eingangs genannten Art zu schaffen, der durch eine rasche und unkomplizierte Verbindung von Rahmenelementen zusammengefügt werden kann. Zudem setzt sich die Erfindung zum Ziel, ein Verfahren der eingangs genannten Art vorzusehen, mit welchem der Rahmen auf rasche und einfache Weise durch Verbinden der Rahmenelemente zusammengefügt werden kann.

Diese Aufgabe wird durch einen Rahmen mit den Merkmalen von Anspruch 1 und durch ein Verfahren mit den Merkmalen von Anspruch 15 gelöst. Bevorzugte Ausführungsformen und Weiterbildungen sind in den abhängigen Ansprüchen angegeben.

Der Rahmen ist gemäß der Erfindung dadurch gekennzeichnet, dass die Verbindungseinrichtung eine Rasteinrichtung mit einem ersten Rastelement am ersten Rahmenelement, einem zweiten Rastelement am zweiten Rahmenelement und einem Auslöseelement aufweist, welches zwischen einer Ruheposition, in welcher eine Trennung des ersten Rahmenelements vom zweiten Rahmenelement blockiert ist, und einer Auslöseposition, in welcher eine Trennung des ersten Rahmenelements vom zweiten Rahmenelement freigegeben ist, verstellbar ausgebildet ist, wobei im Verbindungszustand der Verbindungseinrichtung, mit dem Auslöseelement in der Ruheposition, das erste Rastelement mit dem zweiten Rastelement verrastet ist und im Verbindungszustand der Verbindungseinrichtung, mit dem Auslöseelement in der Auslöseposition, das erste Rastelement vom zweiten Rastelement gelöst ist.

Der Rahmen ist aus mehreren Rahmenelementen zusammengesetzt und weist somit ein erstes Rahmenelement und ein zweites Rahmenelement auf. Der Rahmen ist in seiner Umfangsrichtung bevorzugt in sich geschlossen ausgebildet, umschließt hierdurch einen Innenraum des Rahmens, und kann die Form eines Vierecks, insbesondere eines Rechtecks oder Quadrats, aufweisen. Unter einem Rahmenelement ist dabei ein sichtbarer Umfangsabschnitt des Rahmens zu verstehen, wobei die Rahmenelemente gemeinsam den Rahmen bilden. Die Rahmenelemente können geradlinig oder gebogen ausgebildet sein. Im Falle eines mehreckigen Rahmens kann jede Seitenkante des Rahmens aus einem, zwei oder mehr als zwei Rahmenelementen zusammengesetzt sein. Insbesondere kann der Rahmen aus mehreren ersten und zweiten Rahmenelementen zusammengesetzt sein, welche aneinander anliegen. Der Rahmen weist zudem eine Verbindungseinrichtung auf, welche ausgebildet ist, das erste Rahmenelement lösbar mit dem zweiten Rahmenelement zu verbinden. Bevorzugt sind jeweils zwei benachbarte Rahmenelemente über eine solche Verbindungseinrichtung miteinander verbunden. In einem Verbindungszustand der Verbindungseinrichtung liegt das erste Rahmenelement im Wesentlichen spaltfrei und direkt am zweiten Rahmenelement an. Somit ist zwischen dem ersten und dem zweiten Rahmenelement kein zusätzlicher Verbindungskörper vorgesehen.

Um ein unbeabsichtigtes Lösen der Verbindung zwischen dem ersten und zweiten Rahmenelement zu verhindern, weist die Verbindungseinrichtung eine Rasteinrichtung mit einem ersten Rastelement am ersten Rahmenelement, einem zweiten Rastelement am zweiten Rahmenelement und einem Auslöseelement auf. Das Auslöseelement unterscheidet sich vom ersten und zweiten Rastelement und kann durch eine Bedienperson betätigt werden. Bevorzugt sind das erste Rastelement und das zweite Rastelement im zusammengesetzten Zustand des ersten und zweiten Rahmenelements nicht sichtbar und insbesondere in einem Innenbereich des ersten und zweiten Rahmenelements und/oder der Verbindungseinrichtung verborgen aufgenommen, wodurch der Rahmen einen hochwertigen Eindruck vermittelt. Das Auslöseelement hingegen ist sichtbar und für eine Bedienperson einfach zugänglich.

Das Auslöseelement ist zwischen einer Ruheposition, in welcher eine Trennung des ersten Rahmenelements vom zweiten Rahmenelement blockiert ist, und einer Auslöseposition, in welcher eine Trennung des ersten Rahmenelements vom zweiten Rahmenelement freigegeben ist, bevorzugt werkzeuglos, verstellbar ausgebildet. Beispielsweise ist das Auslöseelement verschiebbar oder verschwenkbar ausgebildet. Im Verbindungszustand der Verbindungseinrichtung, mit dem Auslöseelement in der Ruheposition, ist das erste Rastelement mit dem zweiten Rastelement verrastet. Im Verbindungszustand der Verbindungseinrichtung, mit dem Auslöseelement in der Auslöseposition, ist das erste Rastelement vom zweiten Rastelement gelöst. Es sei darauf hingewiesen, dass der Verbindungszustand der Verbindungseinrichtung nicht zwingend eine Verrastung des ersten Rastelements mit dem zweiten Rastelement erfordert. In der Auslöseposition kann somit das erste Rahmenelement durch Aufbringen einer Trennkraft vom zweiten Rahmenelement manuell getrennt werden, wobei die Rasteinrichtung die Trennkraft bevorzugt nicht erhöht. Dabei haben sich das erste und das zweite Rahmenelement vor der Trennung im Verbindungszustand der Verbindungseinrichtung befunden. In der Ruheposition des Auslöseelements hingegen kann das erste Rahmenelement vom damit verbundenen zweiten Rahmenelement durch Aufbringen der Trennkraft nicht getrennt werden und insbesondere nicht zerstörungsfrei getrennt werden.

Das erste Rahmenelement und das zweite Rahmenelement können daher rasch und einfach durch die Verbindungseinrichtung in korrekter gegenseitiger Ausrichtung miteinander verbunden und durch die Rasteinrichtung der Verbindungseinrichtung miteinander verrastet oder wieder aus der Verrastung gelöst werden.

Wenn im Verlauf der Beschreibung auf Orts- und Richtungsangaben wie "oben", "unten, "vorne", "hinten", "seitlich", "Längsrichtung", "Breitenrichtung" oder "Höhenrichtung" Bezug genommen wird, so beziehen sich diese Angaben auf einen bestimmungsgemäßen Verwendungszustand des Rahmens, in welchem dieser auf einem Untergrund aufgestellt, an einer Tragvorrichtung montiert oder hängend angeordnet ist. Der Begriff "vertikal" bedeutet in Richtung der Schwerkraft, von "oben" nach "unten", oder umgekehrt. Wenn der Rahmen in einer abweichenden Lage verwendet werden soll, sind die Orts- und Richtungsangaben entsprechend zu übertragen. Die Längsrichtung oder die Längserstreckung eines Rahmenelements verläuft ein Stück weit in Umfangsrichtung des Rahmens.

Gemäß einer bevorzugten Ausführungsform der Erfindung kann die Verbindungseinrichtung ein erstes Verbindungselement am ersten Rahmenelement und ein zweites Verbindungselement am zweiten Rahmenelement aufweisen, wobei das erste Verbindungselement das erste Rastelement aufweist und das zweite Verbindungselement das zweite Rastelement und das Auslöseelement aufweist, welches mit dem zweiten Rastelement verbunden ist. Das erste Verbindungselement und das zweite Verbindungselement sind ausgebildet, im verbundenen Zustand das erste und zweite Rahmenelement präzise, d.h. in der vorgesehenen Position, zueinander anzuordnen. Indem weiters das erste Verbindungselement das erste Rastelement und das zweite Verbindungselement das zweite Rastelement und das Auslöseelement aufweist, kann die Verbindungseinrichtung besonders platzsparend ausgebildet sein. Da die Rastelemente nicht gesondert von den Verbindungselementen an den Rahmenelementen montiert werden müssen, lässt sich der Rahmen zudem rasch zusammenfügen. Da das Auslöseelement mit dem zweiten Rastelement verbunden ist, kann die Rasteinrichtung über das Auslöseelement bedient werden.

Für ein ansprechendes Erscheinungsbild und eine platzsparende Anordnung der Verbindungseinrichtung im Rahmen kann vorgesehen sein, dass das erste Rahmenelement und das zweite Rahmenelement eine zumindest einem weiteren Rahmenelement des Rahmens zugewandte Innenseite und eine der Innenseite gegenüberliegende Außenseite aufweist, wobei die Innenseite und/oder die Außenseite Vertiefungen aufweist, in welchen das erste Verbindungselement und das zweite Verbindungselement versenkt aufgenommen sind, insbesondere mit der Innenseite oder der Außenseite abschließend aufgenommen sind. Das erste und das zweite Verbindungselement können somit beide entweder in der Innenseite oder in der Außenseite des Rahmens versenkt sein, ohne über die Innenseite oder Außenseite vorzustehen. Hierdurch kann der gesamte Innenraum des Rahmens, beispielsweise für Präsentationszwecke, ohne Einschränkung durch vorstehende Teile der Verbindungseinrichtung genutzt werden. Der Innenraum des Rahmens wird durch die Innenseite des Rahmens begrenzt, während die Außenseite des Rahmens beispielsweise einem Untergrund zugewandt ist, auf welchem der Rahmen aufgestellt ist. Da das erste und das zweite Verbindungselement in einer Vertiefung aufgenommen sind, ist auch das Auslöseelement in der Vertiefung angeordnet und hierdurch vor einer unbeabsichtigten Betätigung besser geschützt.

Besonders günstig ist es, wenn die Vertiefungen eine Führungsrille aufweisen, in welche ein, vorzugsweise zumindest eine Durchgangsöffnung aufweisender, erster Befestigungsteil des ersten Verbindungselements und ein, vorzugsweise zumindest eine Durchgangsöffnung aufweisender, zweiter Befestigungsteil des zweiten Verbindungselements eingesetzt ist. Die Führungsrille kann sich entlang des gesamten Rahmenelements erstrecken. Die Breite der Führungsrille kann entlang ihrer Längserstreckung variieren. Wenn die Führungsrille eine Hinterschneidung aufweist, können der erste Befestigungsteil des ersten Verbindungselements und der zweite Befestigungsteil des zweiten Verbindungselements in die Führungsrille eingeschoben werden und durch Schrauben in den Durchgangsöffnungen mit den Rahmenelementen verschraubt werden. Die Hinterschneidung der Führungsrille verhindert zusätzlich ein Herausfallen des ersten und/oder zweiten Verbindungselements aus der Führungsrille.

Um beim Zusammenfügen des Rahmens das erste Verbindungselement in Bezug auf das zweite Verbindungselement korrekt positionieren zu können, wird bevorzugt, dass das erste Verbindungselement einen vom ersten Rahmenelement abstehenden Verbindungsvorsprung aufweist und das zweite Verbindungselement eine Verbindungsausnehmung aufweist, in welcher der Verbindungsvorsprung im Verbindungszustand aufgenommen ist. Durch das Einsetzen des Verbindungsvorsprungs in die Verbindungsausnehmung wird das Zusammenfügen des ersten Verbindungselements mit dem zweiten Verbindungselement besonders einfach gestaltet. Vorzugsweise sind der Verbindungsvorsprung und die Verbindungsausnehmung für eine passgenaue Verbindung ausgebildet, um das erste und zweite Rahmenelement möglichst spaltfrei und mit möglichst geringem Spiel verbinden zu können.

Für eine besonders zuverlässige Konstruktion kann vorgesehen sein, dass die Verbindungsausnehmung eine Einführöffnung zum Einführen des Verbindungsvorsprungs, eine der Einführöffnung gegenüberliegende Endwand, einen zwischen den Einführöffnung und der Endwand verlaufenden Boden und zwei vom Boden abstehende, in Richtung von der Einführöffnung zur Endwand in einem spitzen Winkel zueinander verlaufende Ausnehmungs-Seitenwände mit einer Hinterschneidung zum Boden hin aufweist und der Verbindungsvorsprung zwei in Richtung zur Endwand in einem spitzen Winkel zueinander verlaufende und in die Hinterschneidung eingreifende Vorsprung-Seitenwände aufweist. Der spitze Winkel zwischen den Vorsprung-Seitenwänden erleichtert das Einsetzen des Verbindungsvorsprungs in die Verbindungsausnehmung. Wegen der Hinterschneidung der Ausnehmungs-Seitenwände nimmt der Abstand zwischen den Ausnehmungs-Seitenwänden in Richtung zum Boden hin zu. Ebenso nimmt, bei einer Betrachtung des Verbindungsvorsprungs in der Verbindungsausnehmung, der Abstand zwischen den Vorsprung-Seitenwänden in Richtung zum Boden hin zu. Die Hinterschneidung verhindert somit ein Lösen des Verbindungsvorsprungs aus der Verbindungsausnehmung in einer Richtung senkrecht zum Boden.

Die Rasteinrichtung kann besonders vorteilhaft konstruiert sein, indem das mit dem Auslöseelement verbundene zweite Rastelement einen Rastvorsprung aufweist, welcher in der Ruheposition in die Verbindungsausnehmung hineinragt und das erste Rastelement eine Rastvertiefung im Verbindungsvorsprung ist, in welche der Rastvorsprung im Verbindungszustand, mit dem Auslöseelement in der Ruheposition, eingreift. Indem der Rastvorsprung ohne Betätigung des Auslöseelements, d.h. in der Ruheposition des Auslöseelements, in die Verbindungsausnehmung hineinragt und daher im Verbindungszustand der Verbindungseinrichtung in die Rastvertiefung eingreift, wird der Verbindungsvorsprung zuverlässig in der Verbindungsausnehmung gehalten und ein unbeabsichtigtes Lösen des ersten Rahmenelements vom zweiten Rahmenelement verhindert. Zum beabsichtigten Lösen des ersten Rahmenelements vom zweiten Rahmenelement kann das Auslöseelement betätigt werden, sodass das Auslöseelement in die Auslöseposition überführt wird, wodurch auch die Position des zweiten Rastelements verändert wird und der Rastvorsprung aus dem Eingriff mit der Rastvertiefung gelöst wird. Bevorzugt ist der Rastvorsprung als Stift oder Schenkel ausgebildet. Insbesondere kann der Rastvorsprung über eine Führungsplatte starr mit dem Auslöseelement verbunden sein. Bevorzugt können der Rastvorsprung und das Auslöseelement senkrecht zur Führungsplatte angeordnet sein.

Der Rahmen kann besonders vorteilhaft aus Rahmenelementen zusammengefügt sein, wenn das erste Rahmenelement und das zweite Rahmenelement eine gemeinsame Rahmenelement-Längsrichtung aufweisen, im Verbindungszustand mit ihren Stirnseiten aneinander anliegen, der Verbindungsvorsprung in der Rahmenelement-Längsrichtung verläuft und auch eine Haupterstreckung der Verbindungsausnehmung in der Rahmenelement-Längsrichtung verläuft. Auf diese Weise kann ein in Rahmenelement-Längsrichtung verlaufender Umfangsabschnitt des Rahmens aus dem ersten und zweiten Rahmenelement zusammengefügt werden. Insbesondere kann mit einer Bewegung in Rahmenelement-Längsrichtung das erste Rahmenelement an das zweite Rahmenelement angenähert und hierdurch der Verbindungsvorsprung in die Verbindungsausnehmung eingesetzt werden.

Für die Ausbildung einer Rahmenecke können das erste Rahmenelement und das zweite Rahmenelement zwei einen Winkel von 90° einschließende Rahmenelement-Längsrichtungen aufweisen, im Verbindungszustand mit einer Stirnseite des ersten oder zweiten Rahmenelements an einer Innenseite des anderen des ersten oder zweiten Rahmenelements anliegen und sowohl der Verbindungsvorsprung als auch eine Haupterstreckung der Verbindungsausnehmung in der Rahmenelement-Längsrichtung des ersten oder zweiten Rahmenelements verlaufen.

Um ein unbeabsichtigtes Lösen des ersten Rahmenelements vom zweiten Rahmenelement zu erschweren, kann das Auslöseelement in einer von der Rahmenelement-Längsrichtung abweichenden Verstellrichtung, insbesondere senkrecht zur Rahmenelement-Längsrichtung, verstellbar ausgebildet sein. Somit kann im Falle einer Kraftaufbringung auf das Auslöseelement in Rahmenelement-Längsrichtung das Auslöseelement nicht von der Ruheposition in die Auslöseposition verstellt werden.

Wenn das Auslöseelement mit dem zweiten Rastelement verbunden ist und über ein bevorzugt am zweiten Rastelement anliegendes elastisches Element, insbesondere ein Federelement, in die Ruheposition vorgespannt ist, kann das Auslöseelement ohne Betätigung einer Bedienperson zuverlässig in der Ruheposition gehalten werden. Das elastische Element kann beispielsweise eine Schraubenfeder sein. Das elastische Element kann alternativ am Auslöseelement anliegen. Da jedoch das Auslöseelement für eine Bedienperson zugänglich ist und somit auch ein am Auslöseelement anliegendes elastisches Element zugänglich und daher Verschmutzung und Beschädigung ausgesetzt wäre, liegt das elastische Element bevorzugt am zweiten Rastelement an und ist insbesondere von der Verbindungseinrichtung abgedeckt.

Für eine einfache Betätigung des Auslöseelements kann vorgesehen sein, dass das Auslöseelement einen Auslösegriff aufweist. Bevorzugt ist der Auslösegriff in einer Ausnehmung der Verbindungseinrichtung aufgenommen.

Gemäß einer weiteren Ausführungsform kann vorgesehen sein, dass das erste Verbindungselement und das zweite Verbindungselement als Flachkörper ausgebildet sind, deren Höhenabmessungen in einer von einer Innenseite zu einer Außenseite des ersten Rahmenelements und des zweiten Rahmenelements verlaufenden Höhenrichtung höchstens 25%, bevorzugt höchstens 20%, besonders bevorzugt höchstens 15% des Abstands zwischen der Innenseite und der Außenseite des ersten Rahmenelements und des zweiten Rahmenelements betragen. Somit können großvolumige Vertiefungen im ersten und zweiten Rahmenelement für die Aufnahme des ersten und zweiten Verbindungselements vermieden werden, wodurch das erste und zweite Rahmenelement im Bereich des ersten und zweiten Verbindungselements besonders stabil ausgebildet sein können.

Um ein ansprechendes Erscheinungsbild zu erzielen, ist es günstig, wenn das erste Rahmenelement und/oder das zweite Rahmenelement zwischen einer zumindest einem weiteren Rahmenelement des Rahmens zugewandten Innenseite und einer der Innenseite gegenüberliegenden Außenseite eine Sichtfläche aufweist, in welcher Leuchtkörper, insbesondere Leuchtdioden, aufgenommen sind, wobei bevorzugt die Leuchtkörper mit einer lichtdurchlässigen Abdeckung abgedeckt sind. Somit kann zumindest ein Umfangsabschnitt des Rahmens durch die Leuchtkörper beleuchtet sein. Die lichtdurchlässige Abdeckung kann unbeabsichtigte Beschädigungen der Leuchtkörper verhindern und vorzugsweise abnehmbar am ersten und/oder zweiten Rahmenelement montiert sein.

Für eine Anordnung von Werbeflächen unterschiedlicher Form im Rahmen kann vorgesehen sein, dass am ersten Rahmenelement und/ oder am zweiten Rahmenelement ein vom Rahmen umgebener Werbeträger montiert ist, insbesondere um eine Drehachse drehbar montiert ist, welche in einer durch den Rahmen aufgespannten Rahmenebene verläuft, und der Werbeträger zumindest abschnittsweise vom Rahmen beabstandet ist. Somit kann die Werbefläche an zumindest einem Werbeträger innerhalb des Rahmens angeordnet sein.

Des eingangs genannte Verfahren weist gemäß der Erfindung zumindest die folgenden Schritte auf:
- Bereitstellen des ersten Rahmenelements, des zweiten Rahmenelements und einer Verbindungseinrichtung, welche ausgebildet ist, das erste Rahmenelement lösbar mit dem zweiten Rahmenelement zu verbinden und welche eine Rasteinrichtung mit einem ersten Rastelement am ersten Rahmenelement, einem zweiten Rastelement am zweiten Rahmenelement und einem Auslöseelement aufweist;
- Zum Verbinden des ersten Rahmenelements mit dem zweiten Rahmenelement, Anlegen des ersten Rahmenelements an das zweite Rahmenelement, sodass die Verbindungseinrichtung das erste Rahmenelement mit dem zweiten Rahmenelement verbindet und das erste Rastelement mit dem zweiten Rastelement verrastet wird; und
- Zum Lösen des ersten Rahmenelements vom zweiten Rahmenelement, Betätigen des Auslöseelements zum Überführen des Auslöseelements von einer Ruheposition, in welcher eine Trennung des ersten Rahmenelements vom zweiten Rahmenelement blockiert ist, in eine Auslöseposition, in welcher eine Trennung des ersten Rahmenelements vom zweiten Rahmenelement freigegeben ist, wodurch das erste Rastelement vom zweiten Rastelement gelöst wird, und Trennen des ersten Rahmenelements vom zweiten Rahmenelement.

Das Verfahren dient somit dem lösbaren Verbinden eines ersten Rahmenelements mit einem zweiten Rahmenelement eines Rahmens, insbesondere LED-Leuchtbox-Rahmens. Um den Rahmen aus Rahmenelementen zusammenzusetzen, werden das erste Rahmenelement, das zweite Rahmenelement und die Verbindungseinrichtung bereitgestellt. Die Verbindungseinrichtung kann bereits vor der Bereitstellung des ersten und zweiten Rahmenelements in das erste und zweite Rahmenelement eingesetzt werden. Die Verbindungseinrichtung ist ausgebildet, das erste Rahmenelement lösbar mit dem zweiten Rahmenelement zu verbinden. Die Verbindungseinrichtung weist zudem eine Rasteinrichtung mit einem ersten Rastelement am ersten Rahmenelement, einem zweiten Rastelement am zweiten Rahmenelement und einem Auslöseelement auf.

Zum Verbinden des ersten Rahmenelements mit dem zweiten Rahmenelement, werden diese vorzugsweise spaltfrei derart aneinander angelegt, dass die Verbindungseinrichtung das erste Rahmenelement mit dem zweiten Rahmenelement verbindet und das erste Rastelement mit dem zweiten Rastelement verrastet wird.

Zum Lösen des ersten Rahmenelements vom zweiten Rahmenelement wird das Auslöseelement bevorzugt manuell betätigt und dabei von der Ruheposition in die Auslöseposition überführt. Durch die Betätigung des Auslöseelements wird das erste Rastelement aus dem Eingriff mit dem zweiten Rastelement gelöst. Daraufhin wird das erste Rahmenelement vom zweiten Rahmenelement getrennt.

Hinsichtlich der Merkmale des Verfahrens und der durch das Verfahren erzielbaren Vorteile wird zudem auf die vorangehende Beschreibung des Rahmens verwiesen, soweit diese Beschreibung für das Verständnis des Verfahrens hilfreich ist und soweit aus der Beschreibung des Rahmens Merkmale und Vorteile des Verfahrens ableitbar sind. Ebenso wird hinsichtlich der Merkmale und Vorteile des Rahmens auch auf die Beschreibung des Verfahrens verwiesen.

Gemäß einer bevorzugten Ausführungsform des Verfahrens kann vor dem Verbinden des ersten Rahmenelements mit dem zweiten Rahmenelement ein erstes Verbindungselement der Verbindungseinrichtung in einer Vertiefung in der Innenseite und/oder Außenseite des ersten Rahmenelements versenkt aufgenommen werden und ein zweites Verbindungselement der Verbindungseinrichtung in einer Vertiefung in der Innenseite und/oder Außenseite des zweiten Rahmenelements versenkt aufgenommen werden.

Das in die Vertiefung des ersten Rahmenelements aufgenommene erste Verbindungselement kann einen ersten Befestigungsteil aufweisen, welcher in die Vertiefung eingesetzt und vorzugsweise darin verschraubt wird und das in die Vertiefung des zweiten Rahmenelements aufgenommene zweite Verbindungselement kann einen zweiten Befestigungsteil aufweisen, welcher in die Vertiefung eingesetzt und vorzugsweise darin verschraubt wird.

Für die Verbindung des ersten Rahmenelements mit dem zweiten Rahmenelement kann ein vom ersten Rahmenelement abstehender Verbindungsvorsprung des ersten Verbindungselements in einer Verbindungsausnehmung des zweiten Verbindungselements aufgenommen werden.

Bevorzugt wird zum Verrasten des ersten Rastelements mit dem zweiten Rastelement ein in der Ruheposition in die Verbindungsausnehmung hineinragender Rastvorsprung des zweiten Rastelements in Eingriff mit einer Rastvertiefung im Verbindungsvorsprung gebracht.

Für die Verbindung des ersten Rahmenelements mit dem zweiten Rahmenelement können insbesondere das erste Rahmenelement und das zweite Rahmenelement in einer gemeinsamen Rahmenelement-Längsrichtung mit ihren Stirnseiten aneinander angelegt werden und hierbei der Verbindungsvorsprung in der Rahmenelement-Längsrichtung in die Verbindungsausnehmung eingesetzt werden.

Besonders bevorzugt kann das Auslöseelement in einer von der Rahmenelement-Längsrichtung abweichenden Verstellrichtung, insbesondere senkrecht zur Rahmenelement-Längsrichtung, zwischen der Ruheposition und der Auslöseposition verstellt werden.

Vorzugsweise wird das Auslöseelement über ein elastisches Element, insbesondere ein Federelement, in die Ruheposition vorgespannt.

Bevorzugt wird das Auslöseelement durch Betätigen eines Auslösegriffs zwischen der Ruheposition und der Auslöseposition verstellt.

Vorzugsweise werden Leuchtkörper, insbesondere Leuchtdioden, welche in einer zwischen einer Innenseite und einer Außenseite des ersten und/oder zweiten Rahmenelements angeordneten Sichtfläche aufgenommen sind, aktiviert und bevorzugt mit einer lichtdurchlässigen Abdeckung abgedeckt.

Vorzugsweise wird am ersten Rahmenelement und/oder am zweiten Rahmenelement ein vom Rahmen umgebener Werbeträger montiert, insbesondere um eine Drehachse drehbar montiert, welche Drehachse in einer durch den Rahmen aufgespannten Rahmenebene verläuft, wobei der Werbeträger zumindest abschnittsweise vom Rahmen beabstandet montiert wird.

Die Erfindung wird nachstehend anhand von bevorzugten Ausführungsbeispielen, auf welche sie jedoch nicht beschränkt sein soll, noch weiter erläutert. In den Zeichnungen zeigen:
Fig. 1 einen aus mehreren Rahmenelementen zusammengesetzten Rahmen gemäß der Erfindung, mit einem ersten Rahmenelement und einem zweiten Rahmenelement, in einer Vorderansicht;
Fig. 2 den Rahmen aus Fig. 1 in einer Seitenansicht;
Fig. 3 den Rahmen aus Fig. 1 in einer perspektivischen Ansicht;
Fig. 4 ein erstes Rahmenelement, ein davon beabstandetes zweites Rahmenelement und eine Verbindungseinrichtung in einer perspektivischen Ansicht;
Fig. 5 ein erstes Verbindungselement und ein zweites Verbindungselement der Verbindungseinrichtung aus Fig. 4, wobei das zweite Verbindungselement auseinandergezogenen dargestellt ist;
Fig. 6 das erste und zweite Verbindungselement der Verbindungseinrichtung aus Fig. 4, wobei das zweite Verbindungselement zusammengebaut dargestellt ist;
Fig. 7 das erste und zweite Verbindungselement der Verbindungseinrichtung aus Fig. 6 in einer Ansicht von oben;
Fig. 8 das erste und zweite Verbindungselement der Verbindungseinrichtung aus Fig. 6 in einem Verbindungszustand, in einer perspektivischen Ansicht;
Fig. 9 das erste und zweite Verbindungselement der Verbindungseinrichtung aus Fig. 6 in einem Verbindungszustand, in einer Ansicht von oben;
Fig. 10 ein erstes Rahmenelement, ein zweites Rahmenelement und die Verbindungseinrichtung, welche zwei Verbindungsstifte am ersten Rahmenelement und zwei Gleitbuchsen im zweiten Rahmenelement aufweist, in einer perspektivischen Ansicht;
Fig. 11 die Verbindungseinrichtung aus Fig. 10, teilweise in auseinandergezogener Darstellung;
Fig. 12 das erste Rahmenelement, das zweite Rahmenelement und die Verbindungseinrichtung aus Fig. 10, im Verbindungszustand;
Fig. 13 ein erstes Rahmenelement und ein damit verbundenes zweites Rahmenelement, welche eine Rahmenecke bilden, in perspektivischer Ansicht;
Fig. 14 das erste und zweite Rahmenelement aus Fig. 13 in einem getrennten Zustand, und die Verbindungseinrichtung mit den zwei Verbindungsstiften;
Fig. 15 die Verbindungseinrichtung aus Fig. 14, wobei die zwei Verbindungsstifte aus einem Rahmenelement herausgezogen dargestellt sind;
Fig. 16 die Verbindungseinrichtung aus Fig. 15, wobei die zwei Verbindungsstifte auch aus einer Stifthalterung herausgezogen dargestellt sind;
Fig. 17 ein erstes Rahmenelement, ein Fußelement und eine Verbindungsanordnung in perspektivischer Ansicht von oben;
Fig. 18 das Fußelement aus Fig. 17, in einem vom ersten Rahmenelement getrennten Zustand;
Fig. 19 das erste Rahmenelement, das Fußelement und die Verbindungsanordnung aus Fig. 17, in perspektivischer Ansicht von unten, wobei die Verbindungsanordnung teilweise auseinandergezogen dargestellt ist;
Fig. 20 die Verbindungsanordnung aus Fig. 17 in auseinandergezogener Darstellung;
Fig. 21 die Verbindungsanordnung aus Fig. 17 vor dem Einsetzen des zweiten Verbindungsteils in das erste Verbindungsteil, in perspektivischer Ansicht;
Fig. 22 die Verbindungsanordnung aus Fig. 17 vor dem Einsetzen des zweiten Verbindungsteils in das erste Verbindungsteil, in einer Ansicht von oben;
Fig. 23 die Verbindungsanordnung aus Fig. 17 nach dem Einsetzen des zweiten Verbindungsteils in das erste Verbindungsteil, in perspektivischer Ansicht;
Fig. 24 die Verbindungsanordnung aus Fig. 17 nach dem Einsetzen des zweiten Verbindungsteils in das erste Verbindungsteil, in einer Ansicht von oben;
Fig. 25 einen Rahmen mit einem darin drehbar angeordneten Werbeträger, in einer Vorderansicht;
Fig. 26 den Rahmen aus Fig. 25 in einer Seitenansicht;
Fig. 27 den Rahmen aus Fig. 25 in einer perspektivischen Ansicht;
Fig. 28 einen Rahmen mit einer darin drehfest angeordneten Videowand als Werbeträger, in einer Vorderansicht;
Fig. 29 den Rahmen aus Fig. 28 in einer Seitenansicht;
Fig. 30 den Rahmen aus Fig. 28 in einer perspektivischen Ansicht;
Fig. 31 ein Ablaufdiagramm für das Verfahren zum lösbaren Verbinden des ersten Rahmenelements mit dem zweiten Rahmenelement; und
Fig. 32 ein Ablaufdiagramm für das Verfahren zum lösbaren Verbinden des ersten Rahmenelements mit einem Fußelement des Rahmens.

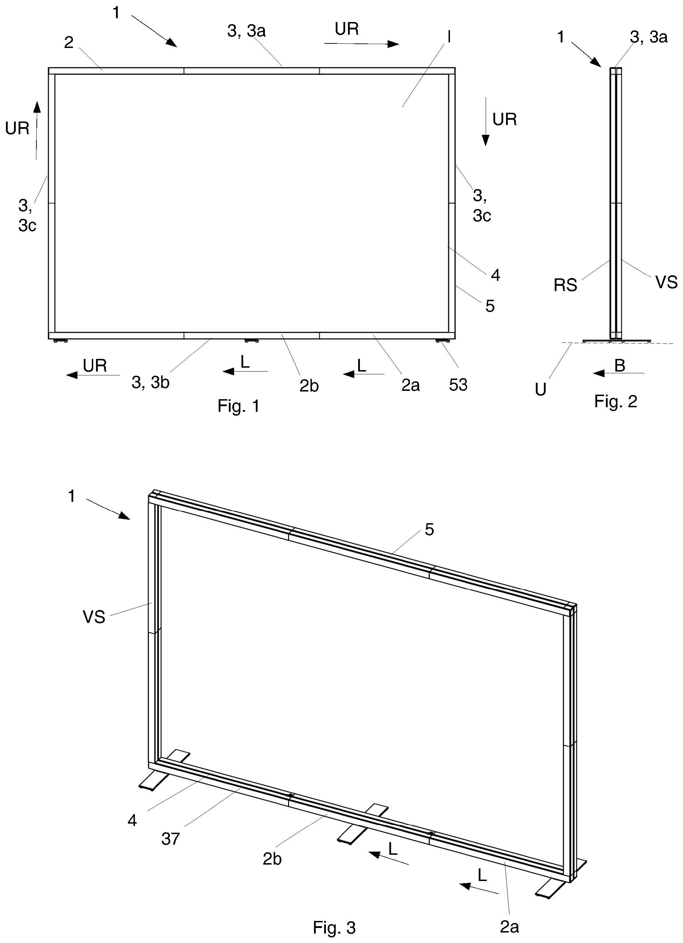

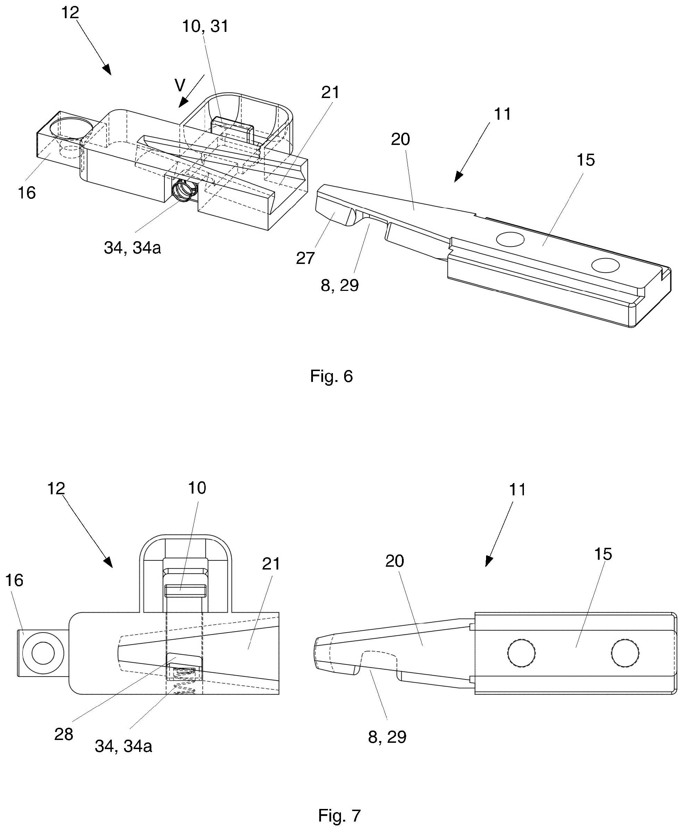

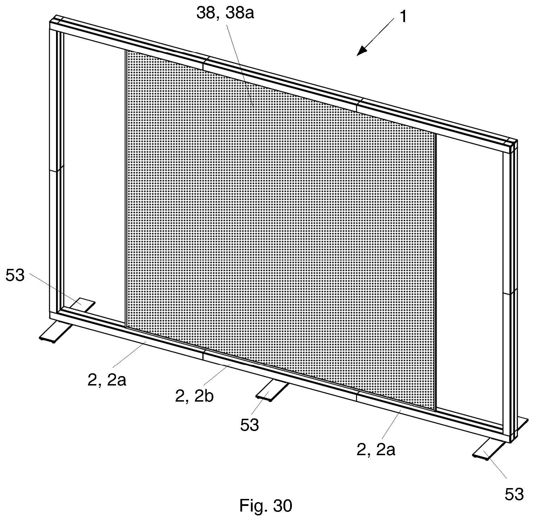

Es sei darauf hingewiesen, dass die Figuren 1 bis 30 nicht notwendigerweise maßstabsgetreu dargestellt sind. Zudem sind der Übersichtlichkeit wegen nicht alle Komponenten des Rahmens in allen Figuren dargestellt. Insbesondere können in unterschiedlichen Figuren, welche jedoch gleiche Abschnitte des Rahmens darstellen, unterschiedliche Komponenten ausgelassen sein.

Fig. 1 zeigt einen Rahmen 1, welcher insbesondere ein LED-Leuchtbox-Rahmen sein kann, welcher aus mehreren Rahmenelementen 2 zusammengesetzt ist. Der Rahmen 1 kann als Träger oder als Umrandung für Werbeflächen dienen. Der Rahmen 1 kann wie im dargestellten Beispiel vier Seitenwände 3, nämlich eine obere Seitenwand 3a, eine untere Seitenwand 3b und zwei seitliche Seitenwände 3c aufweisen. Die obere Seitenwand 3a und die untere Seitenwand 3b können wie im dargestellten Beispiel jeweils aus drei Rahmenelementen 2 zusammengesetzt sein, während die beiden seitlichen Seitenwände 3c jeweils aus zwei Rahmenelementen 2 zusammengesetzt sein können. Der Rahmen 1 ist in Fig. 1 in seiner Umfangsrichtung UR in sich geschlossen ausgebildet und schließt hierdurch einen Innenraum I des Rahmens 1 ein. Der Innenraum I wird durch eine Innenseite 4 des Rahmens 1 begrenzt, während eine der Innenseite 4 gegenüberliegende Außenseite 5 des Rahmens 1 abschnittsweise einem Untergrund U zugewandt sein kann, auf welchem der Rahmen 1 aufgestellt sein kann. Der Rahmen 1 weist insbesondere eine Vorderseite VS und eine Rückseite RS auf, wobei zumindest die Vorderseite VS ausgebildet ist, einem Betrachter zugewandt zu sein. Jedes Rahmenelement 2 weist eine entlang eines Teils des Rahmenumfangs, in Umfangsrichtung UR verlaufende Rahmenelement-Längsrichtung L, eine von der Innenseite 4 zur Außenseite 5 verlaufende Höhenrichtung H und eine von der Vorderseite VS zur Rückseite RS verlaufende Rahmen-Breitenrichtung B auf.

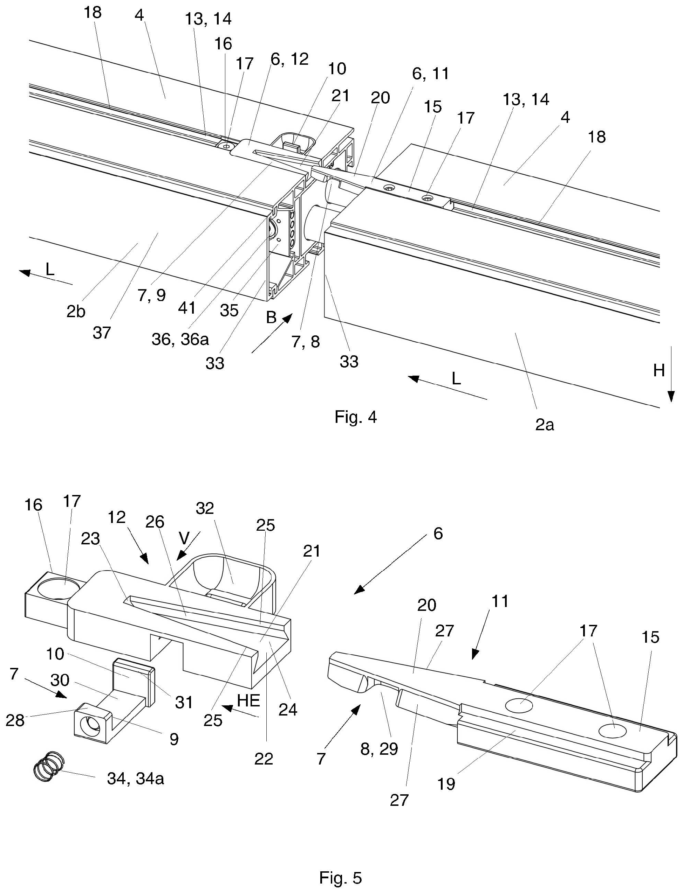

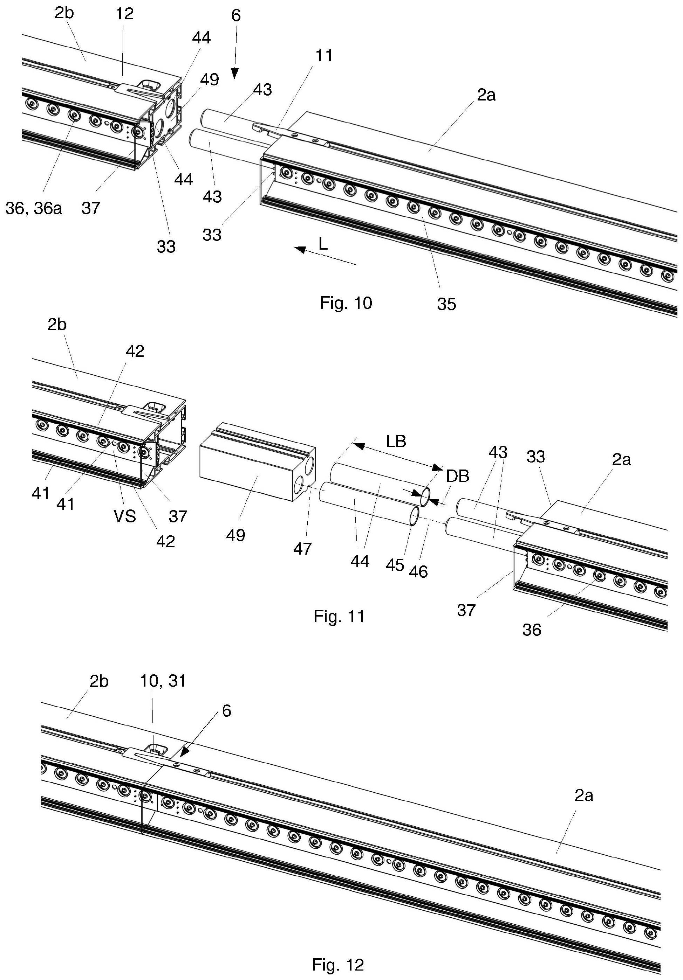

Der Rahmen 1 weist ein erstes Rahmenelement 2a, ein zweites Rahmenelement 2b und eine in den Figuren 4 bis 12 deutlich erkennbare Verbindungseinrichtung 6 auf. Bevorzugt ist jedes Rahmenelement 2 ein erstes Rahmenelement 2a oder ein zweites Rahmenelement 2b. Die Verbindungseinrichtung 6 ist ausgebildet, das erste Rahmenelement 2a lösbar mit dem zweiten Rahmenelement 2b zu verbinden. Im in Fig. 1, 3, 8, 9, 12 und 13 dargestellten Verbindungszustand der Verbindungseinrichtung 6 liegt das erste Rahmenelement 2a am zweiten Rahmenelement 2b an, während in Fig. 4 und 10 das erste Rahmenelement 2a vom zweiten Rahmenelement 2b beabstandet ist. Die Verbindungseinrichtung 6 weist eine Rasteinrichtung 7 mit einem ersten Rastelement 8 am ersten Rahmenelement 2a, einem zweiten Rastelement 9 am zweiten Rahmenelement 2b und einem Auslöseelement 10 auf, siehe Fig. 4 und Fig. 5. Das Auslöseelement 10 ist zwischen einer in Fig. 4 dargestellten Ruheposition, in welcher eine Trennung des ersten Rahmenelements 2a vom zweiten Rahmenelement 2b blockiert ist, und einer nicht dargestellten Auslöseposition, in welcher eine Trennung des ersten Rahmenelements 2a vom zweiten Rahmenelement 2b freigegeben ist, verstellbar ausgebildet. Im Verbindungszustand der Verbindungseinrichtung 6, mit dem Auslöseelement 10 in der Ruheposition, ist das erste Rastelement 8 mit dem zweiten Rastelement 9 verrastet. Im Verbindungszustand der Verbindungseinrichtung 6, mit dem Auslöseelement 10 in der Auslöseposition, ist das erste Rastelement 8 vom zweiten Rastelement 9 gelöst. Somit kann die Verrastung zwischen dem ersten Rastelement 8 und dem zweiten Rastelement 9 durch das Auslöseelement 10 gelöst werden.

Es sei darauf hingewiesen, dass bei einem aus ersten Rahmenelementen 2a und zweiten Rahmenelementen 2b zusammengesetzten Rahmen 1 bevorzugt jedes der Rahmenelemente 2 an seinen beiden Stirnseiten 33 eine Verbindungseinrichtung 6 zur Verbindung mit einem benachbarten ersten Rahmenelement 2a oder zweiten Rahmenelement 2b aufweist. Somit weist beispielsweise das erste Rahmenelement 2a an seiner in Fig. 4 dargestellten linken Stirnseite 33 das erste Rastelement 8 und an seiner in Fig. 4 nicht dargestellten rechten Stirnseite 33 das zweite Rastelement 9 auf. Für den Zweck der Beschreibung der Verbindungseinrichtung 6 wird jedoch jenes Rahmenelement 2 bei welchem in Fig. 4 das erste Rastelement 8 erkennbar ist als erstes Rahmenelement 2a bezeichnet und jenes Rahmenelement 2 bei welchem in Fig. 4 das zweite Rastelement 9 erkennbar ist als zweites Rahmenelement 2b bezeichnet. Alternativ weist beispielsweise das erste Rahmenelement 2a an seiner in Fig. 4 dargestellten linken Stirnseite 33 ein erstes Rastelement 8 und auch an seiner in Fig. 4 nicht dargestellten rechten Stirnseite 33 ein erstes Rastelement 8 auf, während das zweite Rahmenelement 2b an beiden Stirnseiten 33 ein zweites Rastelement 9 aufweist.

In den Figuren 4 bis 7 ist die Rasteinrichtung 7 nicht im Rastzustand dargestellt, sodass das erste Rahmenelement 2a vom zweiten Rahmenelement 2b beabstandt ist, insbesondere die einander gegenüberliegenden Stirnseiten 33 voneinander beabstandet sind. Das Auslöseelement 10 befindet sich in der Ruheposition. Somit befindet sich auch das zweite Rastelement 9 in einer Position in welcher das zweite Rastelement 9 in das erste Rastelement 8 eingreifen würde, wenn das erste Rahmenelement 2a mit dem zweiten Rahmenelement 2b verbunden wäre.

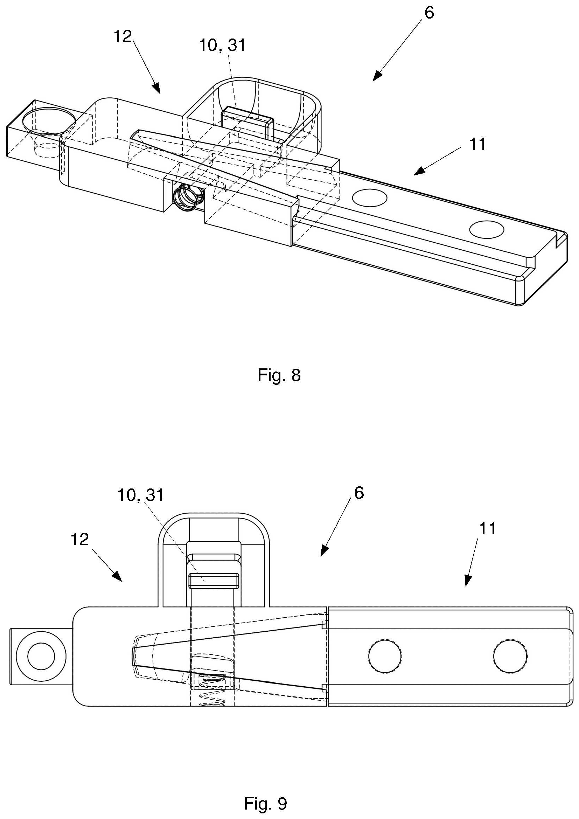

In den Figuren 8 und 9 befindet sich die Verbindungseinrichtung 6 im Verbindungszustand und das Auslöseelement 10 in der Ruheposition, sodass ohne Betätigung des Auslöseelements 10, d.h. ohne Überführen des Auslöseelements 10 in die Auslöseposition, das erste Rahmenelement 2a nicht vom zweiten Rahmenelement 2b getrennt werden kann.

Die Verbindungseinrichtung 6 weist in den Figuren 4 bis 12 ein erstes Verbindungselement 11 und ein zweites Verbindungselement 12 auf. Das erste Verbindungselement 11 ist am ersten Rahmenelement 2a befestigt und das zweite Verbindungselement 12 ist am zweiten Rahmenelement 2b befestigt. Zudem weist das erste Verbindungselement 11 das erste Rastelement 8 auf und das zweite Verbindungselement 12 weist das zweite Rastelement 9 und das Auslöseelement 10 auf, welches mit dem zweiten Rastelement 9 verbunden ist. Wegen der Verbindung des Auslöseelements 10, welches für eine Betätigung durch einen Benutzer vorgesehen ist, mit dem zweiten Rastelement 9, kann die Rastverbindung zwischen dem ersten Rastelement 8 und dem zweiten Rastelement 9 bei Bedarf gelöst werden.

Die Figuren 4 und 10 bis 12 zeigen beispielhaft, dass die Innenseite 4 des ersten Rahmenelements 2a und die Innenseite 4 des zweiten Rahmenelements 2b Vertiefungen 13 aufweisen, in welchen das erste Verbindungselement 11 und das zweite Verbindungselement 12 versenkt aufgenommen sind. Insbesondere sind das erste Verbindungselement 11 und das zweite Verbindungselement 12 mit der Innenseite 4 abschließend aufgenommen, d.h. das erste Verbindungselement 11 und das zweite Verbindungselement 12 stehen nicht über die Innenseite 4 in Richtung des Innenraums I vor.

In einer nicht dargestellten Ausführungsform kann die Verbindungseinrichtung 6 zum Teil an der Außenseite 5 des Rahmens 1 vorgesehen sein. In diesem Fall kann die Außenseite 5 des ersten Rahmenelements 2a und die Außenseite 5 des zweiten Rahmenelements 2b die Vertiefungen 13 aufweisen, in welchen das erste Verbindungselement 11 und das zweite Verbindungselement 12 versenkt und bevorzugt mit der Außenseite 5 abschließend aufgenommen sind.

In den Figuren 4 und 10 bis 12 weisen die Vertiefungen 13 eine Führungsrille 14 auf, in welche ein erster Befestigungsteil 15 des ersten Verbindungselements 11 und ein zweiter Befestigungsteil 16 des zweiten Verbindungselements 12 eingesetzt ist. Der erste Befestigungsteil 15 und der zweite Befestigungsteil 16 weisen im dargestellten Beispiel Durchgangsöffnungen 17 auf, in welche nicht dargestellte Schrauben einsetzbar sind, um den ersten Befestigungsteil 15 mit dem ersten Rahmenelement 2a und den zweiten Befestigungsteil 16 mit dem zweiten Rahmenelement 2b zu verschrauben. Bevorzugt weisen die Führungsrillen 14 eine Hinterschneidung 18 auf, in welche eine Stufe 19 am ersten Verbindungselement 11, eventuell auch am zweiten Verbindungselement 12, eingreift. Die Führungsrillen 14 erstrecken sich bevorzugt in Längsrichtung L des jeweiligen Rahmenelements 2.

Die Figuren 4 bis 12 zeigen weiters beispielhaft, dass das erste Verbindungselement 11 einen vom ersten Rahmenelement 2a abstehenden Verbindungsvorsprung 20 aufweist und das zweite Verbindungselement 12 eine Verbindungsausnehmung 21 aufweist, in welcher der Verbindungsvorsprung 20 im Verbindungszustand, bevorzugt passgenau, aufgenommen ist. Hierbei weist die Verbindungsausnehmung 21 eine Einführöffnung 22 zum Einführen des Verbindungsvorsprungs 20, eine der Einführöffnung 22 gegenüberliegende Endwand 23, einen zwischen den Einführöffnung 22 und der Endwand 23 verlaufenden Boden 24 und zwei vom Boden 24 abstehende Ausnehmungs-Seitenwände 25 auf, welche in Richtung von der Einführöffnung 22 zur Endwand 23 in einem spitzen Winkel zueinander verlaufen und eine Hinterschneidung 26 zum Boden 24 hin aufweisen. Der Verbindungsvorsprung 20 weist bevorzugt zwei in Richtung zur Endwand 23 in einem spitzen Winkel zueinander verlaufende Vorsprung-Seitenwände 27 auf, welche im Verbindungszustand in die Hinterschneidung 26 eingreifen. Im Verbindungszustand liegen bevorzugt die Vorsprung-Seitenwände 27 zumindest teilweise, insbesondere vollständig, an den Ausnehmungs-Seitenwänden 25 an. Der spitze Winkel zwischen den Vorsprung-Seitenwänden 27 erleichtert das Einführen des Verbindungsvorsprungs 20 in die Verbindungsausnehmung 21.

Im Beispiel gemäß Fig. 5 ist deutlich erkennbar, dass das zweite Rastelement 9 mit dem Auslöseelement 10 verbunden ist und einen Rastvorsprung 28 aufweist. Der Rastvorsprung 28 ragt in der Ruheposition in die Verbindungsausnehmung 21 hinein. Das erste Rastelement 8 ist bevorzugt eine Rastvertiefung 29 im Verbindungsvorsprung 20, in welche der Rastvorsprung 28 im Verbindungszustand eingreift, wenn sich das Auslöseelement 10 in der Ruheposition befindet. Bevorzugt ist der Rastvorsprung 28 als Stift oder Schenkel ausgebildet. Insbesondere kann der Rastvorsprung 28 in einem spitzen Winkel zur Rahmenelement-Längsrichtung L angeordnet sein, damit der Rastvorsprung 28 beim Einsetzen des Verbindungsvorsprungs 20 in die Verbindungsausnehmung 21 von der den Rastvorsprung 28 berührenden Vorsprung-Seitenwand 27 verstellt wird und hierdurch auch das Auslöseelement 10 von der Ruheposition in die Auslöseposition verstellt wird. Im dargestellten Beispiel ist der Rastvorsprung 28 über eine Führungsplatte 30 starr mit dem Auslöseelement 10 verbunden, wobei der Rastvorsprung 28 und das Auslöseelement 10 senkrecht zur Führungsplatte 30 angeordnet sind. Das Auslöseelement 10 weist bevorzugt einen Auslösegriff 31 auf, welcher versenkt in einer Ausnehmung 32 des zweiten Verbindungselements 12 aufgenommen ist.

Die Figuren 1 und 3 bis 5 zeigen, dass das erste Rahmenelement 2a und das zweite Rahmenelement 2b eine gemeinsame Rahmenelement-Längsrichtung L und einander zugewandte Stirnseiten 33 aufweisen. Im Verbindungszustand liegen das erste Rahmenelement 2a und das zweite Rahmenelement 2b mit ihren Stirnseiten 33 aneinander an. Der Verbindungsvorsprung 20 verläuft in der Rahmenelement-Längsrichtung L und eine Haupterstreckung HE der Verbindungsausnehmung 21 verläuft ebenfalls in der Rahmenelement-Längsrichtung L.

Insbesondere die Figuren 4 und 5 lassen erkennen, dass das Auslöseelement 10 in einer von der Rahmenelement-Längsrichtung L abweichenden Verstellrichtung V, insbesondere senkrecht zur Rahmenelement-Längsrichtung L, verstellbar ausgebildet ist. Bevorzugt ist das Auslöseelement 10 in der Verstellrichtung V verschiebbar angeordnet, wofür die Führungsplatte 30 auf dem zweiten Rahmenelement 2b oder auf einer Unterseite des zweiten Verbindungselements 12 gleiten kann.

Gemäß den Figuren 5 bis 9 kann das Auslöseelement 10, welches mit dem zweiten Rastelement 9 verbunden ist, über ein am zweiten Rastelement 9 anliegendes elastisches Element 34, insbesondere ein Federelement 34a, in die Ruheposition vorgespannt sein. Somit nimmt das zweite Rastelement 9, wegen der Vorspannkraft des elastischen Elements 34, jene Position ein, in welcher das zweite Rastelement 9 im Verbindungszustand der Verbindungseinrichtung 6 mit dem ersten Rastelement 8 verrastet ist.

Gemäß der Darstellung in Fig. 4 sind das erste Verbindungselement 11 und das zweite Verbindungselement 12 bevorzugt als Flachkörper ausgebildet. Die Höhenabmessungen der Flachkörper betragen in einer von der Innenseite 4 zur Außenseite 5 des ersten Rahmenelements 2a und des zweiten Rahmenelements 2b verlaufenden Höhenrichtung H höchstens 25%, bevorzugt höchstens 20%, besonders bevorzugt höchstens 15% des Abstands zwischen der Innenseite 4 und der Außenseite 5 des ersten Rahmenelements 2a und des zweiten Rahmenelements 2b. Beispielsweise betragen beim Rahmen 1 der Abstand zwischen der Innenseite 4 und der Außenseite 5 zwischen 3 cm und 10 cm und die Höhenabmessungen des ersten Verbindungselements 11 und des zweiten Verbindungselements 12 zwischen 4,5 mm und 2,5 cm.

In den Figuren 4 und 10 bis 19 ist erkennbar, dass das erste Rahmenelement 2a und/oder das zweite Rahmenelement 2b zwischen der Innenseite 4 und der Außenseite 5 eine Sichtfläche 35 aufweisen kann, in welcher Leuchtkörper 36, insbesondere Leuchtdioden 36a, aufgenommen sind. Bevorzugt sind die Leuchtkörper 36 mit einer lichtdurchlässigen Abdeckung 37 abgedeckt.

Die Figuren 4 und 10 bis 19 zeigen weiters, dass die Innenseite 4 und/oder die Außenseite 5 des ersten Rahmenelements 2a und/ oder des zweiten Rahmenelements 2b zumindest eine Rahmennut 41 aufweist, welche sich in Rahmenelement-Längsrichtung L und insbesondere an den Längskanten des ersten Rahmenelements 2a und/ oder des zweiten Rahmenelements 2b erstreckt. Insbesondere ist die Rahmennut 41 an einer Vorderseite VS des Rahmens 1 vorgesehen. Die lichtdurchlässige Abdeckung 37 kann somit in die Rahmennut 41 der Innenseite 4 und in die Rahmennut 41 der Außenseite 5 eingreifen, insbesondere einschnappen. Für den Eingriff in die Rahmennuten 41 kann die lichtdurchlässige Abdeckung 37 mit den Rahmennuten 41 zusammenwirkende, insbesondere umgebogene, Abdeckungskanten 42 aufweisen.

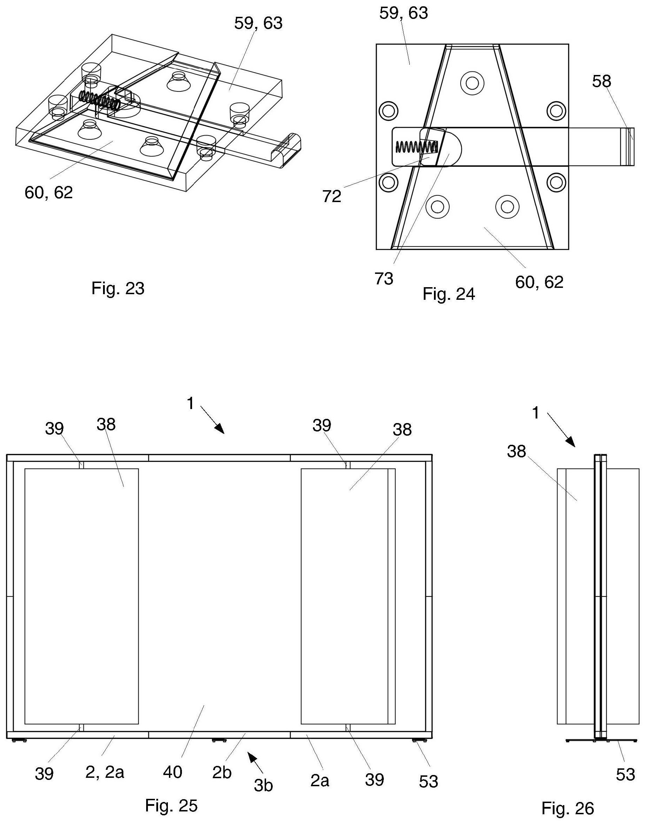

Die Figuren 25 bis 27 zeigen einen Rahmen 1, bei welchem am ersten Rahmenelement 2a und/oder am zweiten Rahmenelement 2b ein vom Rahmen 1 umgebener Werbeträger 38 montiert ist. Der Werbeträger 38 ist um eine Drehachse 39 drehbar montiert, welche in einer durch den Rahmen 1 aufgespannten Rahmenebene 40 verläuft. Zudem ist der Werbeträger 38 zumindest abschnittsweise vom Rahmen 1 beabstandet.

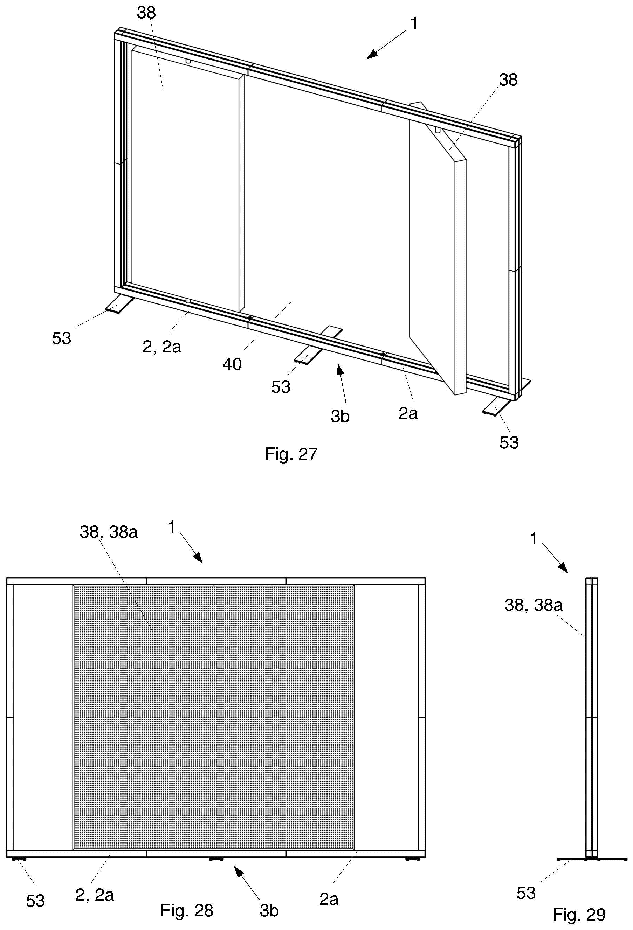

Die Figuren 28 bis 30 zeigen einen Rahmen 1, bei welchem am ersten Rahmenelement 2a und/oder am zweiten Rahmenelement 2b ein vom Rahmen 1 umgebener Werbeträger 38 montiert ist, wobei der Werbeträger 38 eine Videowand 38a ist. Der Werbeträger 38 ist in den Figuren 28 bis 30 drehfest, d.h. nicht um eine Drehachse 39 drehbar, mit dem Rahmenelementen 2 verbunden. Die Videowand 38a ist zumindest abschnittsweise vom Rahmen 1 beabstandet. In einer nicht dargestellten Ausführung kann die Videowand 38a um eine Drehachse 39 drehbar an einem Rahmenelement 2 montiert sein, wobei die Drehachse 39 in einer durch den Rahmen 1 aufgespannten Rahmenebene 40 verläuft. Weiters können in einer nicht dargestellten Ausführung mehrere Videowände 38a vorgesehen sein, wobei jede Videowand 38a an einem anderen Rahmenelement 2 angeordnet sein kann. Aus diese Weise kann der Werbeträger 38 durch Hinzufügen weiterer Rahmenelemente 2 modular erweitert werden.

Fig. 10 zeigt, dass die Verbindungseinrichtung 6 zumindest einen Verbindungsstift 43 am ersten Rahmenelement 2a und zumindest eine Gleitbuchse 44 im zweiten Rahmenelement 2b aufweist. In Fig. 10 weist die Verbindungseinrichtung 6 insbesondere zwei Verbindungsstifte 43 und zwei Gleitbuchsen 44 auf. Im Verbindungszustand der Verbindungseinrichtung 6 ist jeder Verbindungsstift 43 in einer der Gleitbuchsen 44 aufgenommen und liegt jeder Verbindungsstift 43 an einer Innenwand 45 der Gleitbuchsen 44 an. Die Verbindungsstifte 43 erstrecken sich von der Stirnseite 33 des ersten Rahmenelements 2a in Richtung der Gleitbuchsen 44 im zweiten Rahmenelement 2b. Insbesondere verlaufen die Stift-Längsachse 46 des Verbindungsstifts 43 und die Buchsen-Längsachse 47 der Gleitbuchse 44 in der Rahmenelement-Längsrichtung L.

Bei einem aus ersten Rahmenelementen 2a und zweiten Rahmenelementen 2b zusammengesetzten Rahmen 1 kann jedes der Rahmenelemente 2 an seinen beiden Stirnseiten 33 Verbindungsstifte 43 oder Gleitbuchsen 44 aufweisen. Somit weist beispielsweise das erste Rahmenelement 2a an seiner in Fig. 10 dargestellten linken Stirnseite 33 die Verbindungsstifte 43 und an seiner in Fig. 10 nicht dargestellten rechten Stirnseite 33 die Gleitbuchsen 44 auf. Für den Zweck der Beschreibung der Verbindungseinrichtung 6 wird jedoch jenes Rahmenelement 2 bei welchem in Fig. 10 die Verbindungsstifte 43 erkennbar sind als erstes Rahmenelement 2a bezeichnet und jenes Rahmenelement 2 bei welchem in Fig. 10 die Gleitbuchsen 44 erkennbar sind als zweites Rahmenelement 2b bezeichnet. Alternativ weist beispielsweise das erste Rahmenelement 2a an seiner in Fig. 10 dargestellten linken Stirnseite 33 und auch an seiner in Fig. 10 nicht dargestellten rechten Stirnseite 33 Verbindungsstifte 43 auf, während das zweite Rahmenelement 2b an beiden Stirnseiten 33 Gleitbuchsen 44 aufweist.

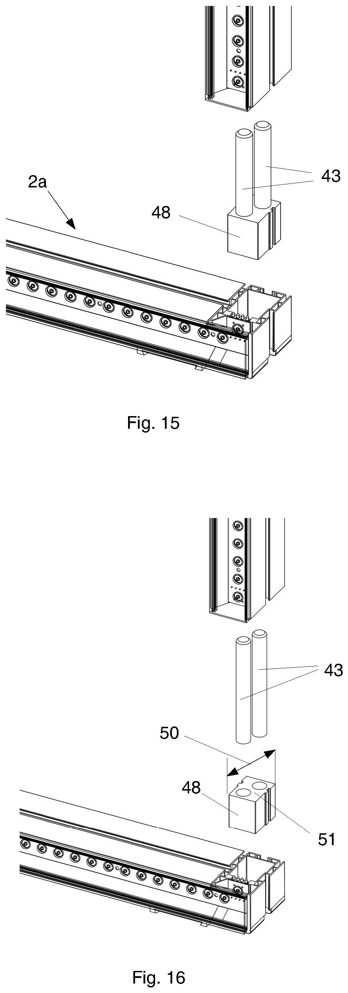

Die Figuren 10, 11, 14 und 15 zeigen, dass der Verbindungsstift 43 in einer Stifthalterung 48 befestigt ist, welche im ersten Rahmenelement 2a insbesondere passgenau aufgenommen ist, und die Gleitbuchse 44 in einer Buchsenhalterung 49 befestigt ist, welche im zweiten Rahmenelement 2b insbesondere passgenau aufgenommen ist. In der Darstellung gemäß Fig. 10 sind das erste Rahmenelement 2a und das zweite Rahmenelement 2b noch nicht miteinander verbunden. Gemäß Fig. 15 kann die Stifthalterung 48 lösbar im ersten Rahmenelement 2a aufgenommen sein. Gemäß Fig. 11 kann die Buchsenhalterung 49 lösbar im zweiten Rahmenelement 2b aufgenommen sein. Zudem kann die Gleitbuchse 44 lösbar in der Buchsenhalterung 49 aufgenommen sein. Fig. 16 zeigt, dass die Verbindungsstifte 43 lösbar in der Stifthalterung 48 aufgenommen sein können.

Die Figuren 10, 11 und 14 bis 16 zeigen, dass sich die zwei Verbindungsstifte 43 von einer eine Flächendiagonale 50 aufweisenden Außenfläche 51 der Stifthalterung 48 erstrecken und entlang der Flächendiagonale 50 angeordnet sind.

Der Verbindungsstift 43 kann außerhalb der Stifthalterung 48, insbesondere auch in der Stifthalterung 48, eine Länge LS zwischen 5 cm und 15 cm, bevorzugt zwischen 8 cm und 12 cm, und einen Außendurchmesser DS zwischen 5 mm und 15 mm, bevorzugt zwischen 8 mm und 12 mm aufweisen. Die Gleitbuchse 44 kann eine Länge LB aufweisen, die zumindest gleich groß wie die Länge LS des Verbindungsstifts 43 außerhalb der Stifthalterung 48 ist. Ein Innendurchmesser DB der Gleitbuchse 44 kann gleich groß wie der Außendurchmesser DS des Verbindungsstifts 43 außerhalb der Stifthalterung 48 sein.

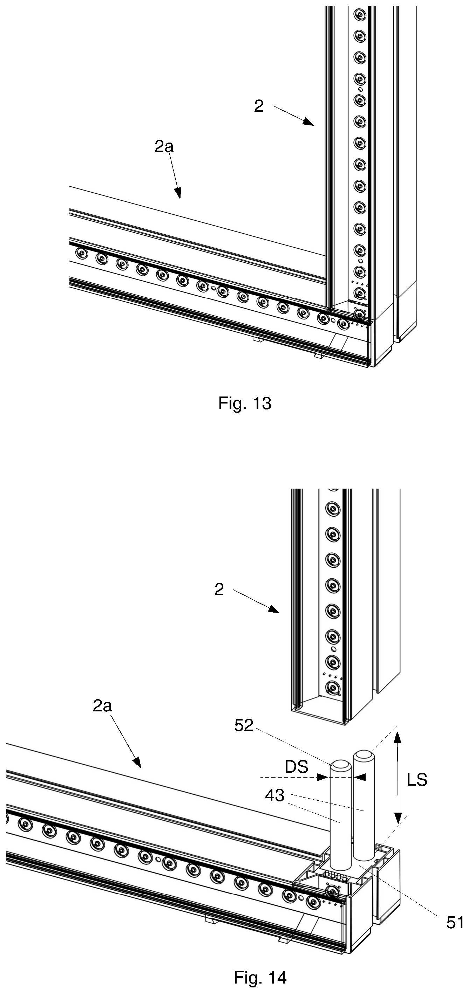

Die Figuren 14 bis 16 zeigen weiters eine Auflaufschräge 52 des Verbindungsstifts 43 an einem vom ersten Rahmenelement 2a abgewandten Ende des Verbindungsstifts 43.

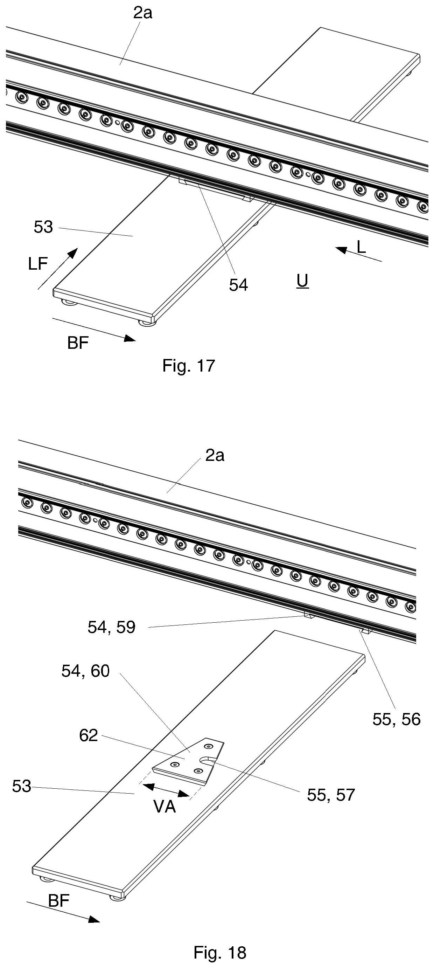

Die Figuren 17 bis 19 zeigen ein erstes Rahmenelement 2a, ein Fußelement 53 zum Aufstellen auf einem Untergrund U und eine Verbindungsanordnung 54. Die Verbindungsanordnung 54 ist ausgebildet, das erste Rahmenelement 2a lösbar mit dem Fußelement 53 zu verbinden, wobei in einem Fuß-Verbindungszustand der Verbindungsanordnung 54 das erste Rahmenelement 2a mit dem Fußelement 53 verbunden ist. In Fig. 17 ist das erste Rahmenelement 2a über die Verbindungsanordnung 54 mit dem Fußelement 53 verbunden dargestellt. In Fig. 18 ist das erste Rahmenelement 2a vom Fußelement 53 getrennt dargestellt.

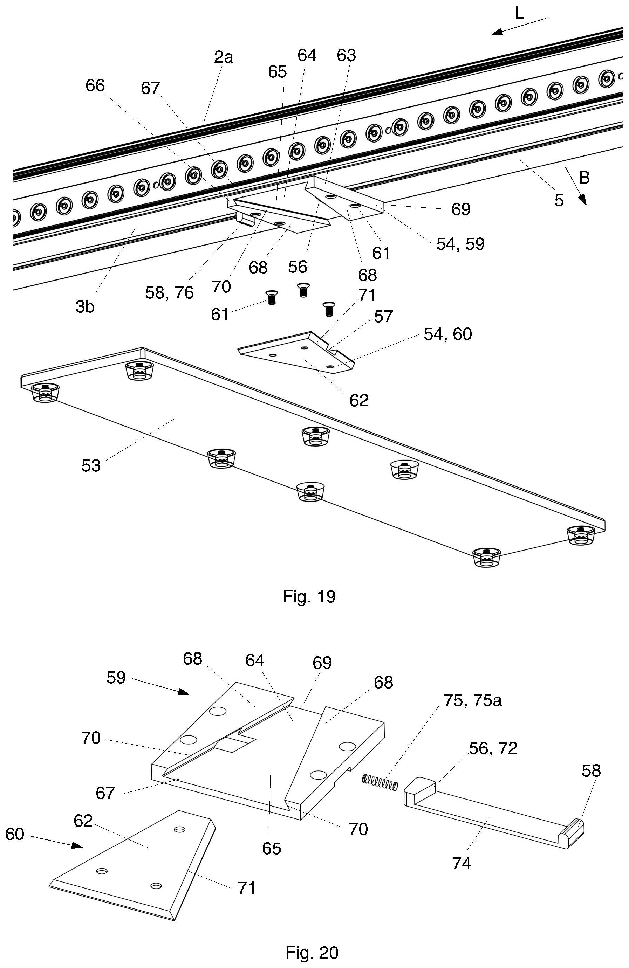

Die Figuren 18 und 19 zeigen deutlich, dass die Verbindungsanordnung 54 eine Rastanordnung 55 mit einem ersten Rastteil 56 am ersten Rahmenelement 2a, einem zweiten Rastteil 57 am Fußelement 53 und einem Bedienelement 58 aufweist. Das Bedienelement 58 kann einen Bediengriff 76 aufweisen. Das Bedienelement 58 ist zwischen einer Rastposition, in welcher eine Trennung des ersten Rahmenelements 2a vom Fußelement 53 blockiert ist, und einer Freigabeposition, in welcher eine Trennung des ersten Rahmenelements 2a vom Fußelement 53 freigegeben ist, verstellbar ausgebildet. Im Fuß-Verbindungszustand der Verbindungsanordnung 54, mit dem Bedienelement 58 in der Rastposition, ist das erste Rastteil 56 mit dem zweiten Rastteil 57 verrastet. Im Fuß-Verbindungszustand der Verbindungsanordnung 54, mit dem Bedienelement 58 in der Freigabeposition, ist das erste Rastteil 56 vom zweiten Rastteil 57 gelöst. Somit kann die Verrastung zwischen dem ersten Rastteil 56 und dem zweiten Rastteil 57 mit dem Bedienelement 58 gelöst werden.

In den Figuren 1 und 25 bis 30 ist jeweils ein Fußelement 53 an jedem Rahmenelement 2 der unteren Seitenwand 3b dargestellt. In einer nicht dargestellten Ausführungsform können jedoch auch zwei oder mehr als zwei Fußelemente 53 an jedem Rahmenelement 2 der unteren Seitenwand 3b befestigt sein.

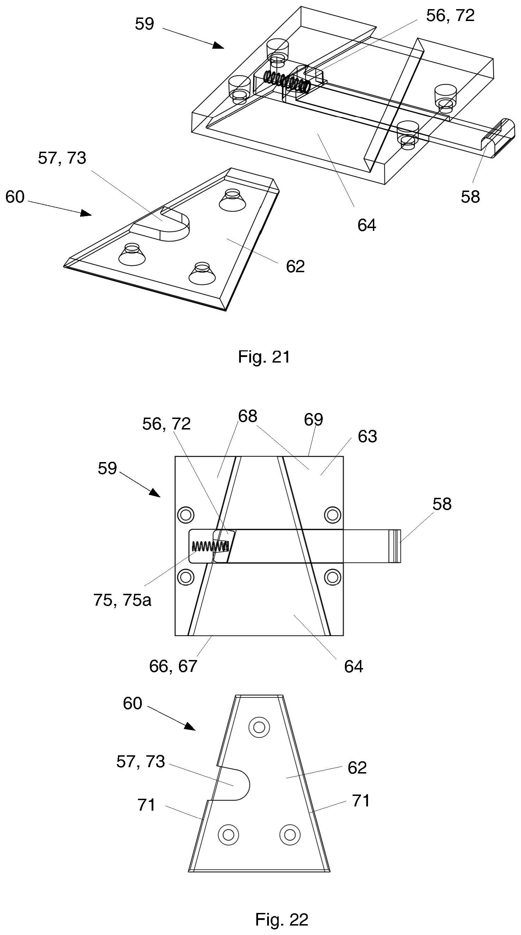

Die Figuren 18 und 19 zeigen beispielhaft, dass die Verbindungsanordnung 54 ein erstes Verbindungsteil 59 am ersten Rahmenelement 2a und ein zweites Verbindungsteil 60 am Fußelement 53 aufweist. In Fig. 19 ist das zweite Verbindungsteil 60 der Übersichtlichkeit wegen in einem Zustand vor der Verbindung mit dem Fußelement 53 dargestellt. Das erste Verbindungsteil 59 weist das erste Rastteil 56 und das Bedienelement 58 auf, welches mit dem ersten Rastteil 56 verbunden ist, siehe Fig. 21. Das zweite Verbindungsteil 60 weist das zweite Rastteil 57 auf. Das erste Verbindungsteil 59 ist bevorzugt an der Außenseite 5 des ersten Rahmenelements 2a befestigt, insbesondere mit der Außenseite 5 über Schrauben 61 verschraubt. Das zweite Verbindungsteil 60 ist bevorzugt am Fußelement 53 befestigt, insbesondere mit dem Fußelement 53 über Schrauben 61 verschraubt.

In den Beispielen gemäß den Figuren 18 und 19 steht weiters das zweite Verbindungsteil 60 vom Fußelement 53 ab und weist eine Verbindungsplatte 62 auf. Das erste Verbindungsteil 59 steht vom ersten Rahmenelement 2a ab, insbesondere von der unteren Seitenwand 3b ab, und weist eine Aufnahmeplatte 63 mit einer Aufnahmenut 64 auf, in welcher die Verbindungsplatte 62 im Fuß-Verbindungszustand aufgenommen ist, siehe Fig. 23 und 24.

Wie in Fig. 19 erkennbar ist, kann die Aufnahmenut 64 einen Aufnahmeboden 65 und eine in einer Vorderseite 66 der Aufnahmeplatte 63 ausgebildete vordere Öffnung 67 zum Einführen der Verbindungsplatte 62 aufweisen und durch zwei vom Aufnahmeboden 65 abstehende Aufnahme-Seitenwände 68 begrenzt sein. Die Aufnahme-Seitenwände 68 können von der vorderen Öffnung 67 in Richtung einer der Vorderseite 66 gegenüberliegenden Rückseite 69 der Aufnahmeplatte 63 in einem spitzen Winkel zueinander verlaufen und eine Hinterschneidung 70 zum Aufnahmeboden 65 hin aufweisen. Die Verbindungsplatte 62 kann zwei in Richtung von der vorderen Öffnung 67 zur Rückseite 69 der Aufnahmeplatte 63 in einem spitzen Winkel zueinander verlaufende und in die Hinterschneidung 70 eingreifende Verbindungs-Seitenwände 71 aufweisen.

Im Beispiel gemäß Fig. 20, welches das erste Verbindungsteil 59 vor einem Zusammenbau zeigt, ist erkennbar, dass das mit dem Bedienelement 58 verbundene erste Rastteil 56 einen Rastkörper 72 aufweist. Der Rastkörper 72 ist über eine Transferplatte 74 mit dem Bedienelement 58 verbunden. In Fig. 21 ist erkennbar, dass der Rastkörper 72 in der Rastposition in die Aufnahmenut 64 hineinragt und dass das zweite Rastteil 57 eine Rastkerbe 73 in der Verbindungsplatte 62 ist, in welche Rastkerbe 73 der Rastkörper 72 im Fuß-Verbindungszustand, mit dem Bedienelement 58 in der Rastposition, eingreift.

Die Figuren 20 bis 24 zeigen, dass das Bedienelement 58 mit dem ersten Rastteil 56 verbunden ist und über einen bevorzugt am ersten Rastteil 56 anliegenden elastischen Körper 75, insbesondere einen Federkörper 75a, in die Rastposition vorgespannt ist.

Fig. 17 lässt erkennen, dass eine Fuß-Längsrichtung LF des Fußelements 53 bevorzugt schräg, insbesondere senkrecht, zu einer Rahmen-Längsrichtung L des ersten Rahmenelements 2a angeordnet ist.

Die Figuren 19 und 20 zeigen, dass das Bedienelement 58 bevorzugt in der Rahmen-Längsrichtung L verstellbar ausgebildet ist.

Insbesondere die Figuren 17 bis 21 und 23 zeigen, dass das erste Verbindungsteil 59 und das zweite Verbindungsteil 60 als Flachkörper ausgebildet sind. Die Höhenabmessung des ersten Verbindungsteils 59 und die Höhenabmessung des zweiten Verbindungsteils 60 beträgt in einer von der Innenseite 4 zur Außenseite 5 des ersten Rahmenelements 2a verlaufenden Höhenrichtung H höchstens 25%, bevorzugt höchstens 20%, besonders bevorzugt höchstens 15% des Abstands zwischen der Innenseite 4 und der Außenseite 5 des ersten Rahmenelements 2a.

Fig. 18 deutet an, dass eine maximale Abmessung VA der Verbindungsplatte 62 in einer Fuß-Breitenrichtung BF des Fußelements 53 zwischen 40% und 90%, bevorzugt zwischen 50% und 80%, der Abmessungen des Fußelements 53 in der Fuß-Breitenrichtung BF beträgt.

Fig. 19 zeigt, dass eine Abmessung des ersten Verbindungsteils 59 in der Rahmen-Breitenrichtung B des ersten Rahmenelements 2a bevorzugt zumindest so groß wie eine Abmessung des ersten Rahmenelements 2a in der Rahmen-Breitenrichtung B ist.

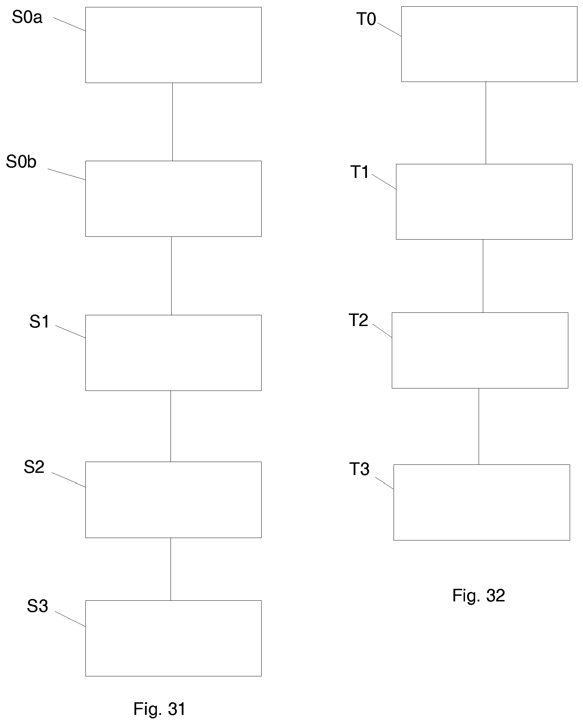

Fig. 31 zeigt ein beispielhaftes Ablaufdiagramm für ein Verfahren zum lösbaren Verbinden eines ersten Rahmenelements 2a mit einem zweiten Rahmenelement 2b eines Rahmens 1, insbesondere LED-Leuchtbox-Rahmens. Das Verfahren weist zumindest folgende Schritte auf.

In einem Schritt S1 werden das erste Rahmenelement 2a, das zweite Rahmenelement 2b und die Verbindungseinrichtung 6 bereitgestellt. Vor dem Schritt S1 kann in einem optionalen Schritt S0a das erste Verbindungselement 11 der Verbindungseinrichtung 6 am ersten Rahmenelement 2a und das zweite Verbindungselement 12 der Verbindungseinrichtung 6 am zweiten Rahmenelement 2b befestigt werden. Vor dem Schritt S1 können zudem in einem weiteren optionalen Schritt S0b der zumindest eine Verbindungsstift 43 der Verbindungseinrichtung 6 im ersten Rahmenelement 2a und die zumindest eine Gleitbuchse 44 der Verbindungseinrichtung 6 im zweiten Rahmenelement 2b befestigt werden.

In einem Schritt S2 wird zum Verbinden des ersten Rahmenelements 2a mit dem zweiten Rahmenelement 2b das erste Rahmenelement 2a an das zweite Rahmenelement 2b derart angelegt, dass die Verbindungseinrichtung 6 das erste Rahmenelement 2a mit dem zweiten Rahmenelement 2b verbindet und das erste Rastelement 8 mit dem zweiten Rastelement 9 verrastet wird. Während des Verbindens des ersten Rahmenelements 2a mit dem zweiten Rahmenelement 2b wird insbesondere jeder Verbindungsstift 43 in einer der Gleitbuchsen 44 aufgenommen und liegt an einer Innenwand 45 der Gleitbuchse 44 an. Zum Verbinden des ersten Rahmenelements 2a mit dem zweiten Rahmenelement 2b wird das erste Verbindungselement 11, insbesondere der Verbindungsvorsprung 20, in das zweite Verbindungselement 12, insbesondere in die Verbindungsausnehmung 21, bevorzugt eingeschoben.

In einem Schritt S3 wird zum Lösen des ersten Rahmenelements 2a vom zweiten Rahmenelement 2b das Auslöseelement 10 betätigt und hierdurch von der Ruheposition in die Auslöseposition überführt.

Hierdurch wird das erste Rastelement 8 vom zweiten Rastelement 9 gelöst. Schließlich werden das erste Rahmenelement 2a und das zweite Rahmenelement 2b voneinander getrennt, insbesondere auseinandergezogen.

Fig. 32 zeigt ein beispielhaftes Ablaufdiagramm für ein Verfahren zum lösbaren Verbinden des ersten Rahmenelements 2a mit dem Fußelement 53 des Rahmens 1, insbesondere LED-Leuchtbox-Rahmens. Das Verfahren weist zumindest folgende Schritte auf.

In einem Schritt T1 werden das erste Rahmenelement 2a, das Fußelement 53 und die Verbindungsanordnung 54 bereitgestellt. Vor dem Schritt T1 kann in einem optionalen Schritt T0 das erste Verbindungsteil 59 der Verbindungsanordnung 54 am ersten Rahmenelement 2a und das zweite Verbindungsteil 60 der Verbindungsanordnung 54 am Fußelement 53 befestigt werden.

In einem Schritt T2 wird zum Verbinden des ersten Rahmenelements 2a mit dem Fußelement 53 das erste Rahmenelement 2a in Bezug auf das Fußelement 53 derart bewegt, dass die Verbindungsanordnung 54 das erste Rahmenelement 2a mit dem Fußelement 53 verbindet und das erste Rastteil 56 mit dem zweiten Rastteil 57 verrastet wird.

In einem Schritt T3 wird zum Lösen des ersten Rahmenelements 2a vom Fußelement 53 das Bedienelement 58 betätigt und hierdurch von der Rastposition in die Freigabeposition überführt. Hierdurch wird das erste Rastteil 56 vom zweiten Rastteil 57 gelöst. Schließlich werden das erste Rahmenelement 2a und das Fußelement 53 voneinander getrennt, insbesondere auseinandergezogen.

## Patentansprüche

1. Rahmen (1), insbesondere LED-Leuchtbox-Rahmen, aufweisend:
ein erstes Rahmenelement (2a),
ein zweites Rahmenelement (2b) und
eine Verbindungseinrichtung (6), welche ausgebildet ist, das erste Rahmenelement (2a) lösbar mit dem zweiten Rahmenelement (2b) zu verbinden, wobei in einem Verbindungszustand der Verbindungseinrichtung (6) das erste Rahmenelement (2a) am zweiten Rahmenelement (2b) anliegt,
**dadurch gekennzeichnet, dass**
die Verbindungseinrichtung (6) eine Rasteinrichtung (7) mit einem ersten Rastelement (8) am ersten Rahmenelement (2a), einem zweiten Rastelement (9) am zweiten Rahmenelement (2b) und einem Auslöseelement (10) aufweist, welches zwischen einer Ruheposition, in welcher eine Trennung des ersten Rahmenelements (2a) vom zweiten Rahmenelement (2b) blockiert ist, und einer Auslöseposition, in welcher eine Trennung des ersten Rahmenelements (2a) vom zweiten Rahmenelement (2b) freigegeben ist, verstellbar ausgebildet ist, wobei im Verbindungszustand der Verbindungseinrichtung (6), mit dem Auslöseelement (10) in der Ruheposition, das erste Rastelement (8) mit dem zweiten Rastelement (9) verrastet ist und im Verbindungszustand der Verbindungseinrichtung (6), mit dem Auslöseelement (10) in der Auslöseposition, das erste Rastelement (8) vom zweiten Rastelement (9) gelöst ist.

2. Rahmen (1) nach Anspruch 1, **dadurch gekennzeichnet, dass** die Verbindungseinrichtung (6) ein erstes Verbindungselement (11) am ersten Rahmenelement (2a) und ein zweites Verbindungselement (12) am zweiten Rahmenelement (2b) aufweist, wobei das erste Verbindungselement (11) das erste Rastelement (8) aufweist und das zweite Verbindungselement (12) das zweite Rastelement (9) und das Auslöseelement (10) aufweist, welches mit dem zweiten Rastelement (9) verbunden ist.

3. Rahmen (1) nach Anspruch 2, **dadurch gekennzeichnet, dass** das erste Rahmenelement (2a) und das zweite Rahmenelement (2b) eine zumindest einem weiteren Rahmenelement (2) des Rahmens (1) zugewandte Innenseite (4) und eine der Innenseite (4) gegenüberliegende Außenseite (5) aufweist, wobei die Innenseite (4) und/oder die Außenseite (5) Vertiefungen (13) aufweist, in welchen das erste Verbindungselement (11) und das zweite Verbindungselement (12) versenkt aufgenommen sind, insbesondere mit der Innenseite (4) oder der Außenseite (5) abschließend aufgenommen sind.

4. Rahmen (1) nach Anspruch 3, **dadurch gekennzeichnet, dass** die Vertiefungen (13) eine Führungsrille (14) aufweisen, in welche ein, vorzugsweise zumindest eine Durchgangsöffnung (17) aufweisender, erster Befestigungsteil (15) des ersten Verbindungselements (11) und ein, vorzugsweise zumindest eine Durchgangsöffnung (17) aufweisender, zweiter Befestigungsteil (16) des zweiten Verbindungselements (12) eingesetzt ist.

5. Rahmen (1) nach einem der Ansprüche 2 bis 4, **dadurch gekennzeichnet, dass** das erste Verbindungselement (11) einen vom ersten Rahmenelement (2a) abstehenden Verbindungsvorsprung (20) aufweist und das zweite Verbindungselement (12) eine Verbindungsausnehmung (21) aufweist, in welcher der Verbindungsvorsprung (20) im Verbindungszustand aufgenommen ist.

6. Rahmen (1) nach Anspruch 5, **dadurch gekennzeichnet, dass** die Verbindungsausnehmung (21) eine Einführöffnung (22) zum Einführen des Verbindungsvorsprungs (20), eine der Einführöffnung (22) gegenüberliegende Endwand (23), einen zwischen den Einführöffnung (22) und der Endwand (23) verlaufenden Boden (24) und zwei vom Boden (24) abstehende, in Richtung von der Einführöffnung (22) zur Endwand (23) in einem spitzen Winkel zueinander verlaufende Ausnehmungs-Seitenwände (25) mit einer Hinterschneidung (26) zum Boden (24) hin aufweist und der Verbindungsvorsprung (20) zwei in Richtung zur Endwand (23) in einem spitzen Winkel zueinander verlaufende und in die Hinterschneidung (26) eingreifende Vorsprung-Seitenwände (27) aufweist.

7. Rahmen (1) nach Anspruch 5 oder 6, **dadurch gekennzeichnet, dass** das mit dem Auslöseelement (10) verbundene zweite Rastelement (9) einen Rastvorsprung (28) aufweist, welcher in der Ruheposition in die Verbindungsausnehmung (21) hineinragt und das erste Rastelement (8) eine Rastvertiefung (29) im Verbindungsvorsprung (20) ist, in welche der Rastvorsprung (28) im Verbindungszustand, mit dem Auslöseelement (10) in der Ruheposition, eingreift.

8. Rahmen (1) nach einem der Ansprüche 5 bis 7, **dadurch gekennzeichnet, dass** das erste Rahmenelement (2a) und das zweite Rahmenelement (2b) eine gemeinsame Rahmenelement-Längsrichtung (L) aufweisen, im Verbindungszustand mit ihren Stirnseiten (33) aneinander anliegen, der Verbindungsvorsprung (20) in der Rahmenelement-Längsrichtung (L) verläuft und auch eine Haupterstreckung (HE) der Verbindungsausnehmung (21) in der Rahmenelement-Längsrichtung (L) verläuft.

9. Rahmen (1) nach Anspruch 8, **dadurch gekennzeichnet, dass** das Auslöseelement (10) in einer von der Rahmenelement-Längsrichtung (L) abweichenden Verstellrichtung (V), insbesondere senkrecht zur Rahmenelement-Längsrichtung (L), verstellbar ausgebildet ist.

10. Rahmen (1) nach einem der Ansprüche 1 bis 9, **dadurch gekennzeichnet, dass** das Auslöseelement (10) mit dem zweiten Rastelement (9) verbunden ist und über ein bevorzugt am zweiten Rastelement (9) anliegendes elastisches Element (34), insbesondere ein Federelement (34a), in die Ruheposition vorgespannt ist.

11. Rahmen (1) nach einem der Ansprüche 1 bis 10, **dadurch gekennzeichnet, dass** das Auslöseelement (10) einen Auslösegriff (31) aufweist.

12. Rahmen (1) nach einem der Ansprüche 2 bis 9, **dadurch gekennzeichnet, dass** das erste Verbindungselement (11) und das zweite Verbindungselement (12) als Flachkörper ausgebildet sind, deren Höhenabmessungen in einer von einer Innenseite (4) zu einer Außenseite (5) des ersten Rahmenelements (2a) und des zweiten Rahmenelements (2b) verlaufenden Höhenrichtung (H) höchstens 25%, bevorzugt höchstens 20%, besonders bevorzugt höchstens 15% des Abstands zwischen der Innenseite (4) und der Außenseite (5) des ersten Rahmenelements (2a) und des zweiten Rahmenelements (2b) betragen.

13. Rahmen (1) nach einem der Ansprüche 1 bis 12, **dadurch gekennzeichnet, dass** das erste Rahmenelement (2a) und/oder das zweite Rahmenelement (2b) zwischen einer zumindest einem weiteren Rahmenelement (2) des Rahmens (1) zugewandten Innenseite (4) und einer der Innenseite (4) gegenüberliegenden Außenseite (5) eine Sichtfläche (35) aufweist, in welcher Leuchtkörper (36), insbesondere Leuchtdioden (36a), aufgenommen sind, wobei bevorzugt die Leuchtkörper (36) mit einer lichtdurchlässigen Abdeckung (37) abgedeckt sind.

14. Rahmen (1) nach einem der Ansprüche 1 bis 13, **dadurch gekennzeichnet, dass** am ersten Rahmenelement (2a) und/oder am zweiten Rahmenelement (2b) ein vom Rahmen (1) umgebener Werbeträger (38) montiert ist, insbesondere um eine Drehachse (39) drehbar montiert ist, welche in einer durch den Rahmen (1) aufgespannten Rahmenebene (40) verläuft, und der Werbeträger (38) zumindest abschnittsweise vom Rahmen (1) beabstandet ist.

15. Verfahren zum lösbaren Verbinden eines ersten Rahmenelements (2a) mit einem zweiten Rahmenelement (2b) eines Rahmens (1), insbesondere LED-Leuchtbox-Rahmens, zumindest aufweisend die Schritte:
- Bereitstellen (S1) des ersten Rahmenelements (2a), des zweiten Rahmenelements (2b) und einer Verbindungseinrichtung (6), welche ausgebildet ist, das erste Rahmenelement (2a) lösbar mit dem zweiten Rahmenelement (2b) zu verbinden und welche eine Rasteinrichtung (7) mit einem ersten Rastelement (8) am ersten Rahmenelement (2a), einem zweiten Rastelement (9) am zweiten Rahmenelement (2b) und einem Auslöseelement (10) aufweist;
- Zum Verbinden des ersten Rahmenelements (2a) mit dem zweiten Rahmenelement (2b), Anlegen (S2) des ersten Rahmenelements (2a) an das zweite Rahmenelement (2b), sodass die Verbindungseinrichtung (6) das erste Rahmenelement (2a) mit dem zweiten Rahmenelement (2b) verbindet und das erste Rastelement (8) mit dem zweiten Rastelement (9) verrastet wird; und
- Zum Lösen des ersten Rahmenelements (2a) vom zweiten Rahmenelement (2b), Betätigen (S3) des Auslöseelements (10) zum Überführen des Auslöseelements (10) von einer Ruheposition, in welcher eine Trennung des ersten Rahmenelements (2a) vom zweiten Rahmenelement (2b) blockiert ist, in eine Auslöseposition, in welcher eine Trennung des ersten Rahmenelements (2a) vom zweiten Rahmenelement (2b) freigegeben ist, wodurch das erste Rastelement (8) vom zweiten Rastelement (9) gelöst wird, und Trennen des ersten Rahmenelements (2a) vom zweiten Rahmenelement (2b).
